# EUROPEAN PATENT APPLICATION

(11) **EP 3 450 500 A1**
(43) Date of publication of application: **06.03.2019**
(21) Application number: 17789465.6
(22) Date of filing: 24.04.2017
(51) Int. Cl.: C08L 67/02, C08K 3/00, C08K 5/04, C08K 5/41, C08L 53/02, C09K 3/00

(54) **POLYESTER RESIN MOLDING COMPOSITION FOR DAMPING MATERIALS**

(30) Priority: 25.04.2016 JP 2016087237
(71) Applicant: Kao Corporation, Chuo-Ku Tokyo 103-8210 (JP)
(72) Inventor: ODA, Yoshiro, Wakayama 640-8580 (JP); SATO, Keito, Wakayama 640-8580 (JP)
(74) Representative: Hoffmann Eitle
(86) International application number: PCT/JP2017/016212
(87) International publication number: WO 2017/188183

(57) **Abstract**

A polyester resin molding composition for vibration-damping material containing a thermoplastic polyester resin (A) constituted of a dicarboxylic acid component and a diol component, a plasticizer and/or an elastomer (B), and an inorganic filler (C), wherein the polyester resin molding composition satisfies one or both selected from the following (i) a weight-average molecular weight (Mw) is 50,000 or more and 150,000 or less, and an absolute degree of crystallinity (Xc) is 5% or more; and (ii) a weight-average molecular weight (Mw) is 150,000 or less, and an absolute degree of crystallinity (Xc) is 5% or more and 37% or less. The polyester resin molding composition of the present invention can be suitably used as a vibration-damping material in, for example, manufactured articles, such as materials for audio equipment such as speakers, television, radio cassette recorders, headphones, audio components, or microphones, electric appliances, transportation vehicles, construction buildings, and industrial equipment, or parts or housing thereof.

## Description

### FIELD OF THE INVENTION

The present invention relates to a polyester resin molding composition for a vibration-damping material. More specifically, the present invention relates to a polyester resin molding composition usable as a vibration-damping material in audio equipment, electric appliances, transportation vehicles, construction buildings, industrial equipment, or the like, a vibration-damping material containing the polyester resin molding composition, and a method for producing the polyester resin molding composition.

### BACKGROUND OF THE INVENTION

In the recent years, countermeasures for vibrations of various equipment have been required, and especially, the countermeasures are in demand in fields such as automobiles, household electric appliances, and precision instruments. In general, materials having high vibration-damping property include materials in which a metal plate and a vibration-absorbing material such as a rubber or asphalt are pasted together, or composite materials such as vibration-damping steel plates in which a vibration-absorbing material is sandwiched with metal plates. These vibration-damping materials retain the form of high-rigidity metal plate while absorbing vibrations with a vibration-absorbing material. In addition, vibration-damping materials include alloy materials in which kinetic energy is converted to thermal energy utilizing twinning or ferromagnetization to absorb vibrations even when only metals alone are used. However, there are some disadvantages that the composite materials have limitations in molding processability because different materials are pasted together, and that a manufactured product itself becomes heavy because a metal steel plate is used. In addition, the alloy materials are also heavy because of use of metals alone, and further have been insufficient in vibration-damping property.

In view of the prior art as mentioned above, as a functional resin composition that has a vibration-damping function and also other general physical properties, for example, Patent Publication 1 discloses that a material having excellent vibration damping property and excellent toughness is obtained by blending a crystalline thermoplastic polyester resin as a main component, a specified polymer selected from polyester elastomers and thermoplastic polyurethanes, and further glass fibers having a specified shape.

In addition, Patent Publication 2 discloses that as a vibration-damping material using an environmental-friendly polylactic acid resin, a molded article obtained by including a specified amount of a styrene-isoprene block copolymer based on a polylactic acid resin having a specified melt flow rate has excellent vibration-damping property.
Patent Publication 1: Japanese Patent Laid-Open No. Hei-3-263457
Patent Publication 2: WO 2014/034636

### SUMMARY OF THE INVENTION

The present invention relates to the following [1] to [4]:
[1] A polyester resin molding composition for vibration-damping material containing:
   a thermoplastic polyester resin (A) constituted of a dicarboxylic acid component and a diol component,
   a plasticizer and/or an elastomer (B), and
   an inorganic filler (C),
   wherein the polyester resin molding composition satisfies one or both selected from the following (i) and (ii):
      (i) a weight-average molecular weight (Mw) is 50,000 or more and 150,000 or less, and an absolute degree of crystallinity (Xc) is 5% or more; and
      (ii) a weight-average molecular weight (Mw) is 150,000 or less, and an absolute degree of crystallinity (Xc) is 5% or more and 37% or less.
[2] A vibration-damping material containing a polyester resin molding composition as defined in the above [1].
[3] A method for producing a polyester resin molding composition for vibration-damping material, including the following steps (A-1) and (A-2):
   step (A-1): melt-kneading raw materials containing a thermoplastic polyester resin (A) constituted of a dicarboxylic acid component and a diol component, a plasticizer and/or an elastomer (B), and an inorganic filler (C), to prepare a melt-kneaded product having a weight-average molecular weight (Mw) of 50,000 or more and 150,000 or less; and
   step (A-2): molding a melt-kneaded product obtained in the step (A-1), to provide a molded article having an absolute degree of crystallinity (Xc) of 5% or more.
[4] A method for producing a polyester resin molding composition for vibration-damping material, including the following steps (B-1) and (B-2):
   step (B-1): melt-kneading raw materials containing a thermoplastic polyester resin (A) constituted of a dicarboxylic acid component and a diol component, a plasticizer and/or an elastomer (B), and an inorganic filler (C), to prepare a melt-kneaded product having a weight-average molecular weight (Mw) of 150,000 or less; and
   step (B-2): molding a melt-kneaded product obtained in the step (B-1) to provide a molded article having an absolute degree of crystallinity (Xc) of 5% or more and 37% or less.

### DETAILED DESCRIPTION OF THE INVENTION

As resin compositions which can replace various kinds of vibration-damping materials, further improvements in conventional polyester resin compositions are needed. In other words, the development of a polyester resin composition capable of not only making damping of vibrations faster to improve vibration-damping property, but also making an initial vibrating width of the vibrations smaller is in demand.

The present invention relates to a polyester resin molding composition for a vibration-damping material which can serve as a vibration-damping material having excellent vibration-damping property and heat resistance, a vibration-damping material containing the polyester resin molding composition, and a method for producing the polyester resin molding composition.

Since the polyester resin molding composition of the present invention has a short vibration time as a structural member and has excellent heat resistance, in the manufactured product equipment, or apparatus or structured article that generates vibrations or noises, by using to a molded article in which vibrations or noises are directly or indirectly transmitted, or placing the material between the sources of vibrations or noises, the generated vibrations are damped and consequently excellent effects are exhibited that extraneous vibrations pertaining to properties of manufactured products or apparatus or unpleasant vibrations, or vibrating sounds or noises are reduced. Also, the polyester resin molding composition of the present invention has some effects of having excellent flowability before molding, so that its handling is excellent.

The polyester resin molding composition for a vibration-damping material of the present invention contains a thermoplastic polyester resin (A) constituted of a dicarboxylic acid component and a diol component, a plasticizer and/or an elastomer (B), and an inorganic filler (C), characterized in that the polyester resin molding composition shows a weight-average molecular weight (Mw) and an absolute degree of crystallinity (Xc) in specified values. The polyester resin molding composition as used herein may be described as the polyester resin composition of the present invention.

Generally, when an inorganic filler is added to a resin, elastic modulus of an overall resin composition is improved, while a loss factor is lowered. The lowering of this loss factor is due to a decrease in the amount of energy loss in a resin moiety because a proportion of a resin in the resin composition is reduced by addition of a filler. In view of the above, in the present invention, it has been found that a plasticizer and/or an elastomer, e.g., a styrene-isoprene block copolymer, is added to the system to give flexibility, so that energy loss is likely to take place, thereby improving loss factor, and that the lowering of loss factor can be suppressed while increasing the elastic modulus of the resin molding composition. Further, in the polyester resin molding composition of the present invention, it is assumed that frictions are generated in the interfaces between a resin or a plasticizer and/or an elastomer and an inorganic filler to cause energy loss, so that the lowering of loss factor is even more suppressed.

In addition, as the mechanisms of exhibiting excellent vibration-damping property for the polyester resin molding composition of the present invention, the resin molding composition takes the constitution of a resin matrix comprising a mixture of crystalline portions and amorphous portions, and it is considered that the mechanisms are caused by the crystalline portions in the matrix that are present in a specified proportion. In other words, inhomogeneous continuous morphologies having different elastic moduli are formed in a specified balance, so that when vibration is applied, large strains are locally generated in the amorphous portions having lower elastic moduli, whereby consequently generating shearing frictions based on strains, thereby improving energy loss. Accordingly, it is assumed that even higher vibration-damping property can be exhibited by constructing a resin molding composition having a lower absolute degree of crystallinity to be present in a relatively high proportion in amorphous portions. However, the present invention is not intended to be limited by these assumptions.

On the other hand, it is considered in the amorphous portions in which shearing frictions are generated to cause energy loss that when the frictions between the molecules of the resins or the interactions between the molecules are larger, the shearing frictions generated become even larger, so that energy loss would increase. Also, generally, energy loss is considered to take place at a terminal of the molecular chain where molecular movement is likely to take place, and it is considered that the smaller the weight-average molecular weight, the more preferred. However, although the detailed mechanisms are not fully elucidated, it has been found in the present invention that surprisingly, the resin molding composition itself having a larger weight-average molecular weight can more improve the energy loss of the resin matrix, and the present invention has been perfected thereby.

### [Polyester Resin Molding Composition]

### [Thermoplastic Polyester Resin (A)]

The thermoplastic polyester resin (A) in the present invention is constituted of a dicarboxylic acid component and a diol component, and can be obtained by a combination of polycondensation of the dicarboxylic acid component and the diol component. Here, the dicarboxylic acid component as used herein embraces dicarboxylic acids and lower ester derivatives thereof, which are collectively referred to as a dicarboxylic acid component.

As the dicarboxylic acid component constituting the thermoplastic polyester resin (A), an aliphatic dicarboxylic acid, an alicyclic dicarboxylic acid, an aromatic dicarboxylic acid, or a dicarboxylic acid having a furan ring can be used. Specifically, the aliphatic dicarboxylic acid is preferably an aliphatic dicarboxylic acid having a total number of carbon atoms of from 2 to 26, which includes, for example, malonic acid, succinic acid, glutaric acid, adipic acid, suberic acid, sebacic acid, dodecanedioic acid, dimer acid, eicosanedionic acid, pimelic acid, azelaic acid, methylmalonic acid, and ethylmalonic acid. The alicyclic dicarboxylic acid is preferably an alicyclic dicarboxylic acid having a total number of carbon atoms of from 5 to 26, which includes, for example, adamantanedicarboxylic acid, norbornene dicarboxylic acid, cyclohexanedicarboxylic acid, and decalin dicarboxylic acid. The aromatic dicarboxylic acid is preferably an aromatic dicarboxylic acid having a total number of carbon atoms of from 8 to 26, which includes, for example, terephthalic acid, isophthalic acid, phthalic acid, 1,4-naphthalenedicarboxylic acid, 1,5-naphthalenedicarboxylic acid, 2,6-naphthalenedicarboxylic acid, 1,8-naphthalenedicarboxylic acid, 4,4'-diphenyldicarboxylic acid, 4,4'-diphenyl ether dicarboxylic acid, 5-sodium sulfoisophthalic acid, phenylindane dicarboxylic acid, anthrecene dicarboxylic acid, phenanthrene dicarboxylic acid, and 9,9'-bis(4-carboxyphenyl)fluorenic acid. The dicarboxylic acid having a furan ring is preferably a dicarboxylic acid having a furan ring having a total number of carbon atoms of from 6 to 26, which includes, for example, 2,5-furandicarboxylic acid. These dicarboxylic acids can be used alone or in a combination of two or more kinds. Among them, one or more members selected from the group consisting of succinic acid, glutaric acid, adipic acid, cyclohexanedicarboxylic acid, terephthalic acid, isophthalic acid, phthalic acid, 1,4-naphthalenedicarboxylic acid, 1,5-naphthalenedicarboxylic acid, 2,6-naphthalenedicarboxylic acid, 1,8-naphthalenedicarboxylic acid, and 2,5-furandicarboxylic acid are preferred, one or more members selected from the group consisting of succinic acid, cyclohexanedicarboxylic acid, terephthalic acid, isophthalic acid, 2,6-naphthalenedicarboxylic acid, and 2,5-furandicarboxylic acid are more preferred, and one or more members selected from the group consisting of terephthalic acid and 2,5-furandicarboxylic acid are even more preferred, from the viewpoint of improving Tg of the thermoplastic polyester resin (A) and improving rigidity.

As the diol component constituting the thermoplastic polyester resin (A), an aliphatic diol, an alicyclic diol, an aromatic diol, or a diol having a furan ring can be used. Specifically, the aliphatic diol is preferably an aliphatic diol and a polyalkylene glycol each having a total number of carbon atoms of from 2 to 26, which includes, for example, ethylene glycol, 1,2-propanediol, 1,3-propanediol, 1,4-butanediol, 1,2-butanediol, 1,3-butanediol, neopentyl glycol, 1,5-pentanediol, 1,6-hexanediol, diethylene glycol, triethylene glycol, polyethylene glycol, and polypropylene glycol. The alicyclic diol is preferably an alicyclic diol having a total number of carbon atoms of from 3 to 26, which includes, for example, cyclohexanedimethanol, hydrogenated bisphenol A, spiroglycol, and isosorbide. The aromatic diol is preferably an aromatic diol having a total number of carbon atoms of from 6 to 26, which includes, for example, bisphenol A, an alkylene oxide adduct of bisphenol A, 1,3-benzenedimethanol, 1,4-benzenedimethanol, 9,9'-bis(4-hydroxyphenyl)fluorene, and 2,2'bis(4'-β-hydroxyethoxyphenyl)propane. The diol having a furan ring is preferably a diol having a furan ring having a total number of carbon atoms of from 4 to 26, which includes, for example, 2,5-dihydroxyfuran. These diols can be used alone or in a combination of two or more kinds. Among them, one or more members selected from the group consisting of ethylene glycol, 1,3-propanediol, 1,4-butanediol, cyclohexanedimethanol, hydrogenated bisphenol A, isosorbide, bisphenol A, an alkylene oxide adduct of bisphenol A, 1,3-benzenedimethanol, 1,4-benzenedimethanol, and 2,5-dihydroxyfuran are preferred, and one or more members selected from the group consisting of ethylene glycol, 1,3-propanediol, 1,4-butanediol, cyclohexanedimethanol, hydrogenated bisphenol A, and 2,5-dihydroxyfuran are more preferred, from the viewpoint of improving vibration-damping property.

In addition, as a combination of the dicarboxylic acid component and the diol component, it is preferable that either one of the dicarboxylic acid or the diol or both contain an aromatic ring, an alicyclic ring, or a furan ring, from the viewpoint of improving Tg of the thermoplastic polyester resin (A) and improving rigidity. Specifically, in a case where the dicarboxylic acid component is one or more members selected from the group consisting of aromatic dicarboxylic acids, alicyclic dicarboxylic acids, and dicarboxylic acids having a furan ring, preferred are combinations thereof with one or more members selected from the group consisting of aliphatic diols, aromatic diols, alicyclic diols, and diols having a furan ring, and more preferred are combinations thereof with one or more members selected from the group consisting of aliphatic diols and aromatic diols. In a case where the dicarboxylic acid component is an aliphatic dicarboxylic acid, preferred are combinations thereof with one or more members selected from the group consisting of aromatic diols, alicyclic diols, and diols having a furan ring, and more preferred are combinations thereof with one or more aromatic diols.

The polycondensation of the above dicarboxylic acid component and the above diol component can be carried out in accordance with a known method without particular limitations.

The thermoplastic polyester resin (A) obtained, when processed as an extrusion molded article, an injection-molded article, such as a film or a sheet, or a thermoformed article, has a glass transition temperature (Tg) of preferably 20°C or higher, more preferably 25°C or higher, even more preferably 30°C or higher, and still even more preferably 35°C or higher, from the viewpoint of giving rigidity capable of supporting its own shape and improving mold processability, and from the viewpoint of improving heat resistance. In addition, the thermoplastic polyester resin has a glass transition temperature of preferably 160°C or lower, more preferably 150°C or lower, even more preferably 140°C or lower, and still even more preferably 130°C or lower, from the viewpoint of improving vibration-damping property. In order to have a glass transition temperature adjusted to the above temperature, it is effective to control the backbone structure of the polyester resin. For example, when a thermoplastic polyester resin is prepared by using a rigid component such as an aromatic dicarboxylic acid component or an alicyclic diol component as a raw material, it is possible to increase a glass transition temperature. Here, the glass transition temperatures of the resins and the elastomers as used herein can be measured in accordance with a method described in Examples set forth below.

In addition, it is preferable that the thermoplastic polyester resin (A) in the present invention has crystallinity. Generally, since there are some differences in elastic moduli between the crystalline portions and the amorphous portions of the resin, a resin matrix comprising only an amorphous portion or a crystalline portion has smaller energy loss without causing large strains to vibrations because of its homogeneous structure. On the other hand, in a resin matrix comprising a mixture of crystalline portions and amorphous portions, inhomogeneous continuous morphologies having different elastic moduli are formed, so that when vibrations are applied, large strains are locally generated in the amorphous portions having lower elastic moduli, whereby consequently generating shearing frictions based on strains to improve energy loss. Accordingly, although the thermoplastic polyester resin generally contains larger proportions of amorphous portions, it is considered that the thermoplastic polyester resin is given crystallinity in the present invention, so that it is possible to even more improve energy loss of the resin matrix. In addition, it is assumed that since the plasticizer and/or elastomer (B) is dispersed in the present invention, the amorphous portion is made flexible or given flexibility with the above component (B), so that the elastic modulus is even more lowered to increase the above effects; therefore, loss factor is even more increased, whereby a polyester resin molding composition having more excellent vibration-damping property can be obtained. The method for preparing a thermoplastic polyester resin having crystallinity includes a method of using a dicarboxylic acid component and a diol component with high purity, and a method of using a dicarboxylic acid component and a diol component with a smaller side chain. Here, a resin having crystallinity as used herein refers to a resin in which exothermic peaks accompanying crystallization are observed when a resin is heated from 25°C to 300°C at a heating rate of 20°C/min, held in that state for 5 minutes, and thereafter cooled to 25°C or lower at a rate of -20°C/min, as prescribed in JIS K7122 (1999). More specifically, the resin refers to a resin having crystallization enthalpy ΔHmc obtained from areas of exothermic peaks of 1 J/g or more. As the thermoplastic polyester resin (A) constituting the present invention, it is preferable that a resin having a crystallization enthalpy ΔHmc of preferably 5 J/g or more, more preferably 10 J/g or more, even more preferably 15 J/g or more, and even more preferably 30 J/g or more is used.

Specific examples of the thermoplastic polyester resin (A) are preferably a polyethylene terephthalate constituted of terephthalic acid and ethylene glycol (PET resin, Tg: 70°C), a polytrimethylene terephthalate constituted of terephthalic acid and 1,3-propanediol (PTT resin, Tg: 50°C), a polybutylene terephthalate constituted of terephthalic acid and 1,4-butanediol (PBT resin, Tg: 50°C), 1,4-cyclohexanedimethylene terephthalate constituted of terephthalic acid and 1,4-cyclohexanedimethanol (PCT resin, Tg: 95°C), a polyethylene naphthalate constituted of 2,6-naphthalenedicarboxylic acid and ethylene glycol (PEN resin, Tg: 121°C), a polybutylene naphthalate constituted of 2,6-naphthalenedicarboxylic acid and 1,4-butanediol (PBN resin, Tg: 78°C), a polyethylene furanoate constituted of 2,5-furandicarboxylic acid and ethylene glycol (PEF resin, Tg: 87°C), and a polybutylene furanoate constituted of 2,5-furandicarboxylic acid and 1,4-butanediol (PBF resin, Tg: 35°C), and more preferably a polyethylene terephthalate constituted of terephthalic acid and ethylene glycol, a polytrimethylene terephthalate constituted of terephthalic acid and 1,3-propanediol, a polybutylene terephthalate constituted of terephthalic acid and 1,4-butanediol, a polyethylene naphthalate constituted of 2,6-naphthalenedicarboxylic acid and ethylene glycol, and a polyethylene furanoate constituted of 2,5-furandicarboxylic acid and ethylene glycol, from the viewpoint of rigidity, heat resistance, and vibration-damping property. These can be used alone or in a combination of two or more kinds.

The content of the thermoplastic polyester resin (A) in the polyester resin molding composition is preferably 50% by mass or more, more preferably 55% by mass or more, and even more preferably 60% by mass or more, from the viewpoint of improving loss factor. In addition, the content is preferably 90% by mass or less, more preferably 80% by mass or less, even more preferably 75% by mass or less, and even more preferably 70% by mass or less, from the viewpoint of improving elastic modulus.

### [Plasticizer and/or Elastomer (B)]

As the component (B) in the present invention, a plasticizer and/or an elastomer is used. Here, the plasticizer and/or the elastomer as used herein may be collectively referred to as the component (B).

### (Plasticizer)

It is preferable that the plasticizer in the present invention contains one or more members selected from the group consisting of polyester-based plasticizers, polyhydric alcohol ester-based plasticizers, polycarboxylic acid ester-based plasticizers, and compounds represented by the following general formula (I): 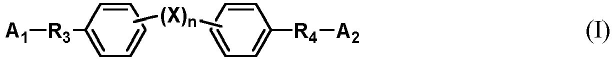 wherein each of A₁ and A₂ is independently an alkyl group having 4 or more carbon atoms and 18 or less carbon atoms, an aralkyl group having 7 or more carbon atoms and 18 or less carbon atoms, or a mono- or diether of a (poly)oxyalkylene adduct thereof; n is 0 or 1; X is any one of -SO₂-, -O-, -CR₁R₂-, and -S-, wherein each of R₁ and R₂ is independently H or an alkyl group having 4 or less carbon atoms, and wherein each of R₃ and R₄ is independently any one of -O-, -CO-, and-CH₂-.

Specific examples of the polyester-based plasticizers include polyesters obtained from a dicarboxylic acid having preferably from 2 to 12 carbon atoms, and more preferably from 2 to 6 carbon atoms, and a di-alcohol or a (poly)oxyalkylene adduct thereof having preferably from 2 to 12 carbon atoms, and more preferably from 2 to 6 carbon atoms, and the like. The dicarboxylic acid includes succinic acid, adipic acid, sebacic acid, phthalic acid, terephthalic acid, isophthalic acid, and the like, and the di-alcohol includes propylene glycol, 1,3-butanediol, 1,4-butanediol, 1,6-hexanediol, ethylene glycol, diethylene glycol, triethylene glycol, and the like. In addition, a hydroxyl group or a carboxy group at a polyester terminal may be esterified with a monocarboxylic acid or a mono-alcohol to cap.

Specific examples of the polyhydric alcohol ester-based plasticizer include mono-, di- or triesters of a polyhydric alcohol or a (poly)oxyalkylene adduct thereof, and a monocarboxylic acid having preferably from 1 to 12 carbon atoms, more preferably from 1 to 6 carbon atoms, and even more preferably from 1 to 4 carbon atoms, or the like. The polyhydric alcohol includes polyethylene glycols, polypropylene glycols, glycerol, the above di-alcohols, and the like. The monocarboxylic acid includes acetic acid, propionic acid, and the like.

The polycarboxylic acid ester-based plasticizer includes mono-, di-or triesters of a polycarboxylic acid, and a mono-alcohol or a (poly)oxyalkylene adduct thereof having preferably from 1 to 12 carbon atoms, more preferably from 1 to 6 carbon atoms, and even more preferably from 1 to 4 carbon atoms, or the like. The polycarboxylic acid includes trimellitic acid, the above dicarboxylic acids, and the like. The mono-alcohol includes methanol, ethanol, 1-propanol, 1-butanol, 2-ethylhexanol, and the like.

Each of A₁ and A₂ in the general formula (I) is independently an alkyl group having 4 or more carbon atoms and 18 or less carbon atoms, an aralkyl group having 7 or more carbon atoms and 18 or less carbon atoms, or a mono- or diether of a (poly)oxyalkylene adduct thereof.

The alkyl group having 4 or more carbon atoms and 18 or less carbon atoms may be linear or branched. The number of carbon atoms of the alkyl group is 4 or more and 18 or less, and the number of carbon atoms is preferably 6 or more, from the viewpoint of improving crystallization velocity, and the number of carbon atoms is preferably 15 or less, more preferably 12 or less, and even more preferably 10 or less, from the viewpoint of bleeding resistance. Specific examples include a butyl group, a pentyl group, a hexyl group a heptyl group, an octyl group, a nonyl group, a decyl group, an undecyl group, a dodecyl group, a hexadecyl group, an octadecyl group, and the like.

The number of carbon atoms of the aralkyl group having 7 or more carbon atoms and 18 or less carbon atoms is preferably 8 or more, from the viewpoint of improving crystallization velocity, and the number of carbon atoms is preferably 15 or less, more preferably 12 or less, and even more preferably 10 or less, from the viewpoint of bleeding resistance. Specific examples include a benzyl group, a phenethyl group, a phenylpropyl group, a phenylpentyl group, a phenylhexyl group, a phenylheptyl group, a phenyloctyl group, and the like.

In addition, the mono- or diether of a (poly)oxyalkylene adduct of the alkyl group or aralkyl group mentioned above includes an ether with a (poly)oxyalkylene group having an alkylene group having preferably from 2 to 10 carbon atoms, more preferably from 2 to 6 carbon atoms, and even preferably from 2 to 4 carbon atoms. The (poly)oxyalkylene group means an oxyalkylene group or a polyoxyalkylene group.

n in the general formula (I) is 0 or 1.

X in the general formula (I) is any one of -SO₂-, -O-, -CR₁R₂-, and -S-, and preferably -SO₂- and -O-, wherein each of R₁ and R₂ is independently H or an alkyl group having 4 or less carbon atoms. The alkyl group having 4 or less carbon atoms may be linear or branched, and includes, for example, a methyl group, an ethyl group, a propyl group, and a butyl group.

Each of R₃ and R₄ in the general formula (I) is independently any one of -O-, -CO-, and -CH₂-.

Specific examples of the compounds represented by the general formula (I) include, for example, the following compounds:

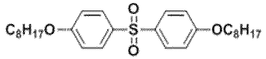

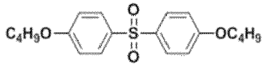

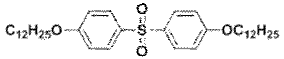

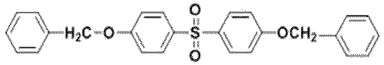

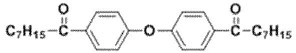

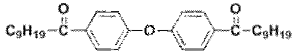

These polyester-based plasticizers, polyhydric alcohol ester-based plasticizers, polycarboxylic acid ester-based plasticizers, and compounds represented by the following general formula (I) can be prepared in accordance with a known method. Alternatively, a commercially available product may be used.

In addition, the plasticizer preferably contains one or more members selected from the group consisting of polyester-based plasticizers having a (poly)oxyalkylene group or an alkylene group having from 2 to 10 carbon atoms, polyhydric alcohol ester-based plasticizers having a (poly)oxyalkylene group or an alkylene group having from 2 to 10 carbon atoms, polycarboxylic acid ester-based plasticizers having a (poly)oxyalkylene group or an alkylene group having from 2 to 10 carbon atoms, and compounds represented by the general formula (I), and more preferably one or more members selected from the group consisting of polyester-based plasticizers, polyhydric alcohol ester-based plasticizers, polycarboxylic acid ester-based plasticizers, each having a (poly)oxyalkylene group, and compounds represented by the general formula (I), from the viewpoint of improving loss factor. Here, the oxyalkylene group has an alkylene group having preferably from 2 to 10 carbon atoms, more preferably from 2 to 6 carbon atoms, and even more preferably from 2 to 4 carbon atoms, and an oxyethylene group, an oxypropylene group or an oxybutylene group is even more preferred, and an oxyethylene group or an oxypropylene group is still even more preferred.

Furthermore, from the viewpoint of improving loss factor, the plasticizer preferably contains one or more members selected from the group consisting of the following Compound Groups (A) to (C), and more preferably one or more members selected from the group consisting of the following Compound Groups (A) and (B). When two or more members are used in combination, the compounds may belong to the same Compound Group, or different Compound Groups.
Compound Group (A): an ester compound having two or more ester groups in the molecule, wherein at least one kind of the alcohol component constituting the ester compound is an adduct of an alcohol reacted with an alkylene oxide having from 2 to 3 carbon atoms in an amount of from 0.5 to 5 mol on average, per one hydroxyl group;
Compound Group (B): a compound represented by the formula (II):

   R⁵O-CO-R⁶-CO-[(OR⁷)ₘO-CO-R⁶-CO-]ₙOR⁵ (II)

   wherein R⁵ is an alkyl group having from 1 to 4 carbon atoms; R⁶ is an alkylene group having from 2 to 4 carbon atoms; R⁷ is an alkylene group having from 2 to 6 carbon atoms, m is the number of from 1 to 6, and n is the number of from 1 to 12, with proviso that all of R⁶'s may be identical or different, and that all of R⁷'s may be identical or different; and
Compound Group (C): an ester compound having two or more ester groups in the molecule, wherein the alcohol component constituting the ester compound is a mono-alcohol.

### Compound Group (A)

It is preferable that the ester compound contained in Compound Group (A) is a polyhydric alcohol ester or a polycarboxylic acid ether ester having two or more ester groups in the molecule, wherein at least one kind of the alcohol component constituting the ester compound is preferably an ester compound which is an adduct of an alcohol reacted with an alkylene oxide having from 2 to 3 carbon atoms in an amount of from 0.5 to 5 mol on average, per one hydroxyl group.

Specific examples of the compound are preferably esters obtained from acetic acid and an adduct of glycerol reacted with ethylene oxide in an amount of from 3 to 6 mol on average (reacted with ethylene oxide in an amount of from 1 to 2 mol per one hydroxyl group); esters obtained from acetic acid and a polyethylene glycol reacted with ethylene oxide in an amount of from 4 to 6 mol on average;
esters obtained from succinic acid and a polyethylene glycol monomethyl ether reacted with ethylene oxide in an amount of from 2 to 3 mol on average (reacted with ethylene oxide in an amount of from 2 to 3 mol per one hydroxyl group);
esters obtained from adipic acid and diethylene glycol monomethyl ether; esters obtained from terephthalic acid and a polyethylene glycol monomethyl ether reacted with ethylene oxide in an amount of from 2 to 3 mol on average (reacted with ethylene oxide in an amount of from 2 to 3 mol per one hydroxyl group); and
esters obtained from 1,3,6-hexanetricarboxylic acid and diethylene glycol monomethyl ether.

### Compound Group (B)

R⁵ in the formula (II) is an alkyl group having from 1 to 4 carbon atoms, and two of them are present in one molecule, both at the terminals of the molecule. R⁵ may be linear or branched, so long as the number of carbon atoms is from 1 to 4. The number of carbon atoms of the alkyl group is preferably from 1 to 4, and more preferably from 1 to 2, from the viewpoint of exhibiting coloration resistance and plasticizing effect. Specific examples include a methyl group, an ethyl group, a propyl group, an isopropyl group, a butyl group, a sec-butyl group, a tert-butyl group, and an iso-butyl group, among which a methyl group and an ethyl group are preferred, and a methyl group is more preferred, from the viewpoint of improving loss factor.

R⁶ in the formula (II) is an alkylene group having from 2 to 4 carbon atoms, and preferred examples include linear alkylene groups. Specific examples include an ethylene group, a 1,3-propylene group, and a 1,4-butylene group. An ethylene group, a 1,3-propylene group, and a 1,4-butylene group are preferred, and an ethylene group is more preferred, from the viewpoint of improving loss factor. Here, all the R⁶'s may be identical or different.

R⁷ in the formula (II) is an alkylene group having from 2 to 6 carbon atoms, and OR⁷ exists in the repeating unit as an oxyalkylene group. R⁷ may be linear or branched so long as the alkylene group has from 2 to 6 carbon atoms. The number of carbon atoms of the alkylene group is preferably from 2 to 6, and more preferably from 2 to 3, from the viewpoint of improving loss factor. Specific examples include an ethylene group, a 1,2-propylene group, a 1,3-propylene group, a 1,2-butylene group, a 1,3-butylene group, a 1,4-butylene group, a 2-methyl-1,3-propylene group, a 1,2-pentylene group, a 1,4-pentylene group, a 1,5-pentylene group, a 2,2-dimethyl-1,3-propylene group, a 1,2-hexylene group, a 1,5-hexylene group, a 1,6-hexylene group, a 2,5-hexylene group, and a 3-methyl-1,5-pentylene group, among which an ethylene group, a 1,2-propylene group, and a 1,3-propylene group are preferred. Here, all the R⁷'s may be identical or different.

m is an average number of repeats of an oxyalkylene group, and is preferably the number of from 1 to 6, more preferably the number of from 1 to 4, and even more preferably the number of from 1 to 3, from the viewpoint of heat resistance.

n is an average number of repeats of repeating units, i.e. an average degree of polymerization, which is the number of from 1 to 12. n is preferably the number of from 1 to 12, more preferably the number of from 1 to 6, and even more preferably the number of from 1 to 5, from the viewpoint of improving loss factor as a vibration-damping material. The average degree of polymerization can be obtained by an analysis such as NMR.

Specific examples of the compound represented by the formula (II) are preferably compounds in which all the R⁵'s are methyl groups, R⁶ is an ethylene group or a 1,4-butylene group, R⁷ is an ethylene group or a 1,3-propylene group, m is the number of from 1 to 4, and n is the number of from 1 to 6, and more preferably compounds in which all the R⁵'s are methyl groups, R⁶ is an ethylene group or a 1,4-butylene group, R⁷ is an ethylene group or a 1,3-propylene group, m is the number of from 1 to 3, and n is the number of from 1 to 5.

The compound represented by the formula (II) is not particularly limited so long as the compound has the structure mentioned above, and those obtained by reacting the following raw materials (1) to (3) are preferred. Here, (1) and (2), or (2) and (3) may form ester compounds. (2) may be an acid anhydride or an acid halide.
(1) Monohydric Alcohol Containing Alkyl Group Having from 1 to 4 Carbon Atoms
(2) Dicarboxylic Acid Containing Alkylene Group Having from 2 to 4 Carbon Atoms
(3) Dihydric Alcohol Containing Alkylene Group Having from 2 to 6 Carbon Atoms

### (1) Monohydric Alcohol Containing Alkyl Group Having from 1 to 4 Carbon Atoms

The monohydric alcohol containing an alkyl group having from 1 to 4 carbon atoms is an alcohol including R⁵ as defined above, and specific examples include methanol, ethanol, 1-propanol, 2-propanol, 1-butanol, 2-butanol, 2-methyl-1-propanol, and tert-butanol. Among them, methanol, ethanol, 1-propanol, and 1-butanol are preferred, methanol and ethanol are more preferred, and methanol is even more preferred, from the viewpoint of improving loss factor.

### (2) Dicarboxylic Acid Containing Alkylene Group Having from 2 to 4 Carbon Atoms

The dicarboxylic acid containing an alkylene group having from 2 to 4 carbon atoms is a dicarboxylic acid including R⁶ as defined above, and specific examples include succinic acid, glutaric acid, adipic acid, and derivatives thereof, e.g. succinic anhydride, glutaric anhydride, dimethyl succinate, dibutyl succinate, dimethyl glutarate, dimethyl adipate, and the like. Among them, succinic acid, adipic acid, and derivatives thereof, e.g. succinic anhydride, dimethyl succinate, dibutyl succinate, and dimethyl adipate are preferred, and succinic acid and derivatives thereof, e.g. succinic anhydride, dimethyl succinate, and dibutyl succinate are more preferred, from the viewpoint of improving loss factor.

### (3) Dihydric Alcohol Containing Alkylene Group Having from 2 to 6 Carbon Atoms

The dihydric alcohol containing an alkylene group having from 2 to 6 carbon atoms is a dihydric alcohol including R⁷ as defined above, and specific examples include ethylene glycol, diethylene glycol, triethylene glycol, tetraethylene glycol, 1,2-propanediol, 1,3-propanediol, 2-methyl-1,3-propanediol, 2,2-dimethyl-1,3-propanediol, 1,2-butanediol, 1,3-butanediol, 1,4-butanediol, 1,2-pentanediol, 1,4-pentanediol, 1,5-pentanediol, 2,5-hexanediol, 1,6-hexanediol, and 3-methyl-1,5-pentanediol. Among them, diethylene glycol, triethylene glycol, 1,2-propanediol, 1,3-propanediol, tetraethylene glycol, and 1,4-butanediol are preferred, diethylene glycol, triethylene glycol, 1,2-propanediol, and 1,3-propanediol are more preferred, and diethylene glycol, triethylene glycol, and 1,3-propanediol are even more preferred, from the viewpoint of improving loss factor.

Accordingly, as the above (1) to (3),
it is preferable that (1) the monohydric alcohol is one or more members selected from the group consisting of methanol, ethanol, 1-propanol, and 1-butanol, that (2) the dicarboxylic acid is one or more members selected from the group consisting of succinic acid, adipic acid, glutaric acid, and derivatives thereof, and that (3) the dihydric alcohol is one or more members selected from the group consisting of diethylene glycol, triethylene glycol, 1,2-propanediol, 1,3-propanediol, tetraethylene glycol, and 1,4-butanediol;
it is more preferable that (1) the monohydric alcohol is one or more members selected from the group consisting of methanol and ethanol, that (2) the dicarboxylic acid is one or more members selected from the group consisting of succinic acid, adipic acid, and derivatives thereof, and that (3) the dihydric alcohol is one or more members selected from the group consisting of diethylene glycol, triethylene glycol, 1,2-propanediol, and 1,3-propanediol; and
it is even more preferable that (1) the monohydric alcohol is methanol, that (2) the dicarboxylic acid is one or more members selected from the group consisting of succinic acid and derivatives thereof, and that (3) the dihydric alcohol is one or more members selected from the group consisting of diethylene glycol, triethylene glycol, and 1,3-propanediol.

The method for obtaining an ester compound represented by the formula (II) by reacting the above (1) to (3) is not particularly limited, and the method includes, for example, the methods of the following Embodiment 1 and Embodiment 2:
Embodiment 1: a method including the steps of carrying out an esterification reaction between (2) a dicarboxylic acid and (1) a monohydric alcohol to synthesize a dicarboxylic acid ester; and carrying out an esterification reaction between a dicarboxylic acid ester obtained and (3) a dihydric alcohol; and
Embodiment 2: a method including the step of allowing to react (1) a monohydric alcohol, (2) a dicarboxylic acid, and (3) a dihydric alcohol at one time.

Among these methods, the method of Embodiment 1 is preferred, from the viewpoint of adjusting an average degree of polymerization. Here, the reactions of each of the steps mentioned above can be carried out in accordance with a known method.

The compound represented by the formula (II) has an acid value of preferably 1.50 mgKOH/g or less, and more preferably 1.00 mgKOH/g or less, from the viewpoint of improving loss factor, and has a hydroxyl value of preferably 10.0 mgKOH/g or less, more preferably 5.0 mgKOH/g or less, and even more preferably 3.0 mgKOH/g or less, from the viewpoint of improving loss factor.

In addition, the number-average molecular weight of the compound represented by the formula (II) is preferably from 300 to 1,500, and more preferably from 300 to 1,000, from the viewpoint of improving loss factor, and from the viewpoint of coloration resistance.

The saponification value of the compound represented by the formula (II) is preferably from 500 to 800 mgKOH/g, and more preferably from 550 to 750 mgKOH/g, from the viewpoint of improving loss factor.

The alkyl esterification percentage based on the two molecular terminals (terminal alkyl esterification percentage) of the compound represented by the formula (II) is preferably 95% or more, and more preferably 98% or more, from the viewpoint of improving loss factor.

The ether group value of the compound represented by the formula (II) is preferably from 0 to 8 mmol/g, and more preferably from 0 to 6 mmol/g, from the viewpoint of shortening the vibration time.

### Compound Group (C)

Specific examples of the ester compounds included in Compound Group (C) are preferably an ester obtained from adipic acid and 2-ethylhexanol (Example: DOA), and an ester obtained from phthalic acid and 2-ethylhexanol (Example: DOP).

The content of one or more members selected from the group consisting of polyester-based plasticizers, polyhydric alcohol ester-based plasticizers, polycarboxylic acid ester-based plasticizers, and compounds represented by the general formula (I), preferably the content of one or more members selected from the group consisting of polyester-based plasticizers, polyhydric alcohol ester-based plasticizers, polycarboxylic acid ester-based plasticizers, each having a (poly)oxyalkylene group or an alkylene group having from 2 to 10 carbon atoms, and compounds represented by the general formula (I), and more preferably the content of one or more members selected from the group consisting of polyester-based plasticizers, polyhydric alcohol ester-based plasticizers, polycarboxylic acid ester-based plasticizers, each having a (poly)oxyalkylene group, and compounds represented by the general formula (I), and the content of one or more compounds selected from the group consisting of Compound Groups (A) to (C) mentioned above, is preferably 50% by mass or more, more preferably 80% by mass or more, even more preferably 90% by mass or more, even more preferably 95% by mass or more, even more preferably substantially 100% by mass, and even more preferably 100% by mass, of the plasticizer, from the viewpoint of improving loss factor. The phrase substantially 100% by mass as used herein refers to a state in which impurities and the like are inevitably contained in a trace amount. The above-mentioned content of the plasticizer as used herein means a total content when plural compounds are contained.

By adding a plasticizer, not only loss factor in a room temperature region is improved but at the same time loss factor can be improved in a wide temperature region such as the low-temperature region or the high-temperature region. The content of the plasticizer, based on 100 parts by mass of the thermoplastic polyester resin (A), is preferably 0.5 parts by mass or more, more preferably 1 part by mass or more, even more preferably 3 parts by mass or more, even more preferably 5 parts by mass or more, even more preferably 10 parts by mass or more, and even more preferably 15 parts by mass or more, from the viewpoint of improving loss factor over a wide temperature region, and the content is preferably 50 parts by mass or less, more preferably 40 parts by mass or less, even more preferably 30 parts by mass or less, and even more preferably 25 parts by mass or less, from the viewpoint of suppressing the lowering of flexural modulus.

In addition, since it is said from the conversion of temperature-frequency of the polymer that exhibiting high loss factor in a wide temperature region can be similarly said as exhibiting high loss factor in a wide frequency region, it is preferable that a plasticizer is added within the range as defined above, also from the viewpoint of realizing high loss factor over a wide frequency region. Furthermore, flexibility of the resin is improved and impact strength is improved by adding a plasticizer, so that the addition of the plasticizer is preferred also from the viewpoint of keeping high impact strength in addition to high loss factor and high elastic modulus. Moreover, some effects are exhibited that flowability is improved and moldability during injection molding is improved by adding a plasticizer.

In addition, the content of the plasticizer in the polyester resin molding composition is preferably 1% by mass or more, more preferably 3% by mass or more, even more preferably 5% by mass or more, and even more preferably 6% by mass or more, from the viewpoint of improving loss factor, and the content is preferably 25% by mass or less, more preferably 20% by mass or less, and even more preferably 15% by mass or less, from the viewpoint of suppressing the lowering of flexural modulus.

### (Elastomer)

In the present invention, one or more elastomers are used, from the viewpoint of improving vibration-damping properties in the low-temperature region and the high-temperature region. As the elastomer in the present invention, a thermoplastic elastomer is preferred.

In the present invention, as the component (B), the plasticizer and the elastomer may be used together, or the plasticizer which may be used alone or in two or more kinds, can be used in a combination with an elastomer which may be used alone or in two or more kinds. By using the plasticizer and the elastomer together, it is preferred because loss factor in a room temperature region is further improved, and loss factor is improved in wide temperature regions such as the low-temperature region and the high-temperature region.

A total content of the plasticizer and the elastomer when used together, based on 100 parts by mass of the thermoplastic polyester resin (A), is preferably 15 parts by mass or more, more preferably 20 parts by mass or more, and even more preferably 25 parts by mass or more, from the viewpoint of improving loss factor. Also, the total content is preferably 60 parts by mass or less, more preferably 50 parts by mass or less, and even more preferably 40 parts by mass or less, from the viewpoint of suppressing the lowering of elastic modulus.

The mass ratio of the plasticizer to the elastomer when used together, i.e. plasticizer/elastomer, is preferably from 30/70 to 70/30, and more preferably from 40/60 to 60/40, from the viewpoint of suppressing the lowering of elastic modulus.

### (Thermoplastic Elastomer)

By using a thermoplastic elastomer as the elastomer, effects of improving vibration-damping properties in the high-temperature region and the low-temperature region are exhibited. Further, vibration-damping property in wide temperature regions of the high-temperature region and the low-temperature region can be improved by using the elastomer together with a plasticizer.

The thermoplastic elastomer has a glass transition temperature Tg of preferably -40°C or higher, and preferably 20°C or lower, from the viewpoint of improving vibration-damping properties in the high-temperature region and the low-temperature region.

The content of the thermoplastic elastomer, based on 100 parts by mass of the thermoplastic polyester resin (A), is preferably 10 parts by mass or more, more preferably 15 parts by mass or more, even more preferably 18 parts by mass or more, even more preferably 20 parts by mass or more, and even more preferably 25 parts by mass or more, from the viewpoint of improving loss factor in the low-temperature region. In addition, the content is preferably 50 parts by mass or less, more preferably 40 parts by mass or less, and even more preferably 35 parts by mass or less, from the viewpoint of suppressing the lowering of flexural modulus.

The content of the thermoplastic elastomer in the polyester resin molding composition is preferably 5% by mass or more, more preferably 10% by mass or more, and even more preferably 15% by mass or more, from the viewpoint of improving loss factor, and the content is preferably 30% by mass or less, more preferably 25% by mass or less, and even more preferably 20% by mass or less, from the viewpoint of suppressing the lowering of flexural modulus.

The thermoplastic elastomer in the present invention is preferably at least one member selected from styrenic thermoplastic elastomers, olefinic thermoplastic elastomers, polyester-based thermoplastic elastomers, polyamide-based thermoplastic elastomers, urethane-based thermoplastic elastomers, nitrile-based thermoplastic elastomers, fluorine-based thermoplastic elastomers, polybutadiene-based thermoplastic elastomers, and silicone-based thermoplastic elastomers. The styrenic thermoplastic elastomers include polystyrene-vinyl-polyisoprene-polystyrene block copolymers, copolymers of styrene and butadiene and hydrogenated product thereof, and examples are "HYBRAR" manufactured by KURARAY PLASTICS CO., Ltd., "Tuftec" and "S.O.E"(registered trademarks) manufactured by Asahi Kasei Corporation, "SEPTON"(registered trademark) manufactured by Kuraray Co., Ltd., "RABALON"(registered trademark) manufactured by Mitsubishi Chemical Corporation, and the like. The olefinic thermoplastic elastomers include those in which an olefinic rubber (EPR, EPDM) is finely dispersed in a matrix made of an olefinic resin (polyethylene, polypropylene, and the like), and examples are "THERMORAN" (registered trademark) manufactured by Mitsubishi Chemical Corporation, "ESPOLEX" (registered trademark) manufactured by Sumitomo Chemicals, Co., Ltd., and the like. The polyester-based thermoplastic elastomers include copolymers of polybutylene terephthalate and polyether, and the like, and examples are "Hytrel"(registered trademark) manufactured by DUPONT-TORAY CO., LTD., and the like. The polyamide-based thermoplastic elastomers include block copolymers of nylon with polyester or polyol or those in which a lactam or a polyether diol of a dicarboxylic acid as a raw material is subjected to transesterification and polycondensation reaction. The urethane-based thermoplastic elastomers are, for example, "TPU" manufactured by Nippon Polyurethane, Co., Ltd. The nitrile-based thermoplastic elastomers include those in which acrylonitrile and butadiene are subjected to emulsion polymerization, and the like. The fluorine-based thermoplastic elastomers include copolymers of vinylidene fluoride and hexafluoropropylene, copolymers of vinylidene fluoride, hexafluoropropylene, and tetrafluoroethylene, and the like, and examples are "FTOR" (registered trademark) manufactured by Showa Kobunshi Kabushiki Kaisha, "Viton" (registered trademark) Series manufactured by Dupont, and the like. The polybutadiene-based and the silicone-based thermoplastic elastomers include an organosilicon polymer binding product having a siloxane bond as a backbone in which an organic group or the like is directly bonded to the silicon atom and the like, and examples include KBM Series manufactured by Shin-Etsu Silicone, and the like. The thermoplastic elastomer is preferably a styrenic thermoplastic elastomer, from the viewpoint of improving vibration-damping properties in the high-temperature region and in the low-temperature region.

### (Styrenic Thermoplastic Elastomer)

The styrenic thermoplastic elastomer in the present invention (which may be hereinafter referred to as styrenic elastomer in some cases) is composed of a block A in which a styrenic compound constituting a hard segment is polymerized and a block B in which a conjugated diene constituting a soft segment is polymerized. The styrenic compound used in the polymer block A includes, for example, styrenic compounds such as styrene, α-methylstyrene, o-methylstyrene, m-methylstyrene, p-methylstyrene, and 1,3-dimethylstyrene; polycyclic aromatic compounds having a vinyl group such as vinylnaphthalene and vinylanthracene, and the like. Among them, the polymer of the styrenic compound is preferred, and the polymer of styrene is more preferred. The conjugated diene used in the polymer block B includes, for example, butadiene, isoprene, butylene, ethylene, 1,3-pentadiene, 2,3-dimethyl-1,3-butadiene, and the like, and preferably includes polyisoprene, polybutadiene, and copolymers of isoprene and butadiene, which is a block copolymer of one or more members selected from these conjugated diene monomers. In addition, in the block B, the styrenic compound used in the above polymer block A may be copolymerized. In the case of each of the copolymers, as the forms thereof, any of the forms of random copolymers, block copolymers, and tapered copolymers can be selected. In addition, the styrenic compound may have a hydrogenated structure.

Specific examples of the styrenic elastomer described above include polystyrene-isoprene block copolymers (SIS), polystyrene-polybutadiene copolymers (SEBS), polystyrene-hydrogenated polybutadiene copolymers (SEBS), polystyrene-hydrogenated polyisoprene-polystyrene block copolymers (SEPS), polystyrene-vinyl-polyisoprene-polystyrene block copolymers (SHIVS), polystyrene-hydrogenated polybutadiene-hydrogenated polyisoprene-polystyrene block copolymers, polystyrene-hydrogenated polybutadiene-polyisoprene-polystyrene block copolymers, and the like. These styrenic elastomers can be used alone in a single kind or in combination of two or more kinds. In the present invention, in particular, it is preferable to use a polystyrene-vinyl-polyisoprene-polystyrene block copolymer, and a commercially available product of the block copolymer as described above includes "HYBRAR" Series manufactured by KURARAY PLASTICS CO., Ltd.

The styrene content in the styrenic elastomer is preferably 10% by mass or more, and more preferably 15% by mass or more, and preferably 30% by mass or less, and more preferably 25% by mass or less, from the viewpoint of improving vibration-damping properties in the high-temperature region and the low-temperature region. Here, the high-temperature region as used herein means a temperature of from 35° to 80°C, and the low-temperature region as used herein means a temperature of from -20° to 10°C, and the styrene content of the styrenic elastomer can be measured in accordance with the method described in Examples set forth below.

The styrenic elastomer is preferably a styrene-isoprene block copolymer and/or a styrene-butadiene block copolymer.

### (Styrene-Isoprene Block Copolymer)

The styrene-isoprene block copolymer in the present invention is a block copolymer that has a polystyrene block at both the terminals, and at least one of the blocks of polyisoprene block or vinyl-polyisoprene block between the terminals. In addition, the block copolymer may be copolymerized with an isoprene block or butadiene block, or may have a hydrogenated structure.

Specific examples of the styrene-isoprene block copolymer mentioned above include, for example, polystyrene-isoprene block copolymers (SIS), polystyrene-hydrogenated polyisoprene-polystyrene block copolymers (SEPS), polystyrene-vinyl-polyisoprene-polystyrene block copolymers (SHIVS), polystyrene-hydrogenated polybutadiene-hydrogenated polyisoprene-polystyrene block copolymers, polystyrene-hydrogenated polybutadiene-polyisoprene-polystyrene block copolymers, and the like. These copolymers may be used alone, or in a combination of two or more kinds. In the present invention, among them, it is preferable to use the polystyrene-vinyl-polyisoprene-polystyrene block copolymers, and a commercially available product of the block copolymer as mentioned above includes "HYBRAR" Series, manufactured by Kuraray Plastics Co., Ltd.

### (Styrene-Butadiene Block Copolymer)

The styrene-butadiene block copolymer in the present invention is a block copolymer that has a polystyrene block at both the terminals, and polybutadiene block or hydrogenated product thereof between the terminals. In addition, the block copolymer may be copolymerized with an isoprene block or butadiene block, or may have a hydrogenated structure.

Specific examples of the styrene-butadiene block copolymer described above include polystyrene-polybutadiene copolymers (SEBS), polystyrene-hydrogenated polybutadiene copolymers (SEBS), polystyrene-polybutadiene copolymers (SBS), polystyrene-hydrogenated polybutadiene copolymers (SBS), and the like. These copolymers may be used alone in a single kind or in a combination of two or more kinds. In the present invention, among them, it is preferable to use the polystyrene-hydrogenated polybutadiene copolymers (SEBS), and a commercially available product of the block copolymer described above includes "S.O.E" manufactured by ASAHI KASEI CHEMICALS.

### [Inorganic Filler (C)]

The polyester resin molding composition of the present invention contains an inorganic filler (C), from the viewpoint of improving flexural modulus. The inorganic filler (C) in the present invention is not particularly limited, so long as it is a known inorganic filler, and specifically, one or more members selected from the group consisting of plate-like fillers, granular fillers, acicular fillers, and fibrous fillers, that are ordinarily usable in the reinforcement of thermoplastic resins can be used.

The plate-like filler refers to those having an aspect ratio (length of the longest side of the largest surface of the plate-like filler/thickness of the surface) of 20 or more and 150 or less. The length of the plate-like filler (length of the longest side in the largest surface) is preferably 1.0 µm or more, more preferably 5 µm or more, even more preferably 10 µm or more, and even more preferably 20 µm or more, and preferably 150 µm or less, more preferably 100 µm or less, even more preferably 50 µm or less, even more preferably 40 µm or less, and even more preferably 30 µm or less, from the viewpoint of obtaining excellent dispersibility in the polyester resin molding composition, improving flexural modulus, and/or improving loss factor. The thickness is, but not particularly limited to, preferably 0.01 µm or more, more preferably 0.05 µm or more, even more preferably 0.1 µm or more, and even more preferably 0.2 µm or more, and preferably 5 µm or less, more preferably 3 µm or less, even more preferably 2 µm or less, even more preferably 1 µm or less, and even more preferably 0.5 µm or less, from the same viewpoint. In addition, the aspect ratio of the plate-like filler is preferably 30 or more, more preferably 40 or more, and even more preferably 50 or more, and preferably 120 or less, more preferably 100 or less, even more preferably 90 or less, and even more preferably 80 or less, from the same viewpoint.

Specific examples of the plate-like filler include, for example, glass flake, non-swellable mica, swellable mica, graphite, metal foil, talc, clay, mica, sericite, zeolite, bentonite, organic modified bentonite, montmorillonite, organic modified montmorillonite, dolomite, smectite, hydrotalcite, plate-like iron oxide, plate-like calcium carbonate, plate-like magnesium hydroxide, plate-like barium sulfate, and the like. Among them, talc, mica, and plate-like barium sulfate are preferred, and talc and mica are more preferred, from the viewpoint of improving flexural modulus and suppressing the lowering of loss factor. The length and thickness of the plate-like filler can be obtained by observing randomly chosen 100 fillers with an optical microscope, and calculating an arithmetic mean thereof.

The granular fillers include not only those showing the true spherical form but also those that are cross-sectionally elliptic or substantially elliptic, and have an aspect ratio (longest diameter of the granular filler/shortest diameter of the granular filler) of 1 or more and less than 2, and one having an aspect ratio of nearly 1 is preferred. The average particle size of the granular filler is preferably 1.0 µm or more, more preferably 5 µm or more, even more preferably 10 µm or more, and even more preferably 20 µm or more, and preferably 50 µm or less, more preferably 40 µm or less, and even more preferably 30 µm or less, from the viewpoint of obtaining excellent dispersibility in the polyester resin molding composition, improving flexural modulus, and/or improving loss factor.

Specific examples include kaolin, fine silicic acid powder, feldspar powder, granular calcium carbonate, granular magnesium hydroxide, granular barium sulfate, aluminum hydroxide, magnesium carbonate, calcium oxide, aluminum oxide, magnesium oxide, titanium oxide, aluminum silicate, various balloons, various beads, silicon oxide, gypsum, novaculite, dawsonite, white clay, and the like. Among them, granular barium sulfate, aluminum hydroxide, and granular calcium carbonate are preferred, and granular calcium carbonate and granular barium sulfate are more preferred, from the viewpoint of improving flexural modulus and improving loss factor. Here, the diameter of the granular filler can be obtained by cutting 100 randomly chosen fillers, observing the cross sections with an optical microscope, and calculating an arithmetic mean thereof.

The acicular filler refers to those having an aspect ratio (particle length/particle size) within the range of 2 or more and less than 20. The length of the acicular filler (particle length) is preferably 1.0 µm or more, more preferably 5 µm or more, even more preferably 10 µm or more, even more preferably 20 µm or more, and even more preferably 30 µm or more, and preferably 150 µm or less, more preferably 100 µm or less, even more preferably 80 µm or less, and even more preferably 60 µm or less, from the viewpoint of obtaining excellent dispersibility in the polyester resin molding composition, improving flexural modulus, and/or improving loss factor. The particle size is, but not particularly limited to, preferably 0.01 µm or more, more preferably 0.1 µm or more, and even more preferably 0.5 µm or more, and preferably 20 µm or less, more preferably 15 µm or less, and even more preferably 10 µm or less, from the same viewpoint. In addition, the aspect ratio of the acicular filler is preferably 5 or more, and preferably 10 or less, from the same viewpoint.

Specific examples of the acicular filler include, for example, potassium titanate whiskers, aluminum borate whiskers, magnesium-based whiskers, silicon-based whiskers, wollastonite, sepiolite, asbestos, zonolite, phosphate fibers, ellestadite, slag fibers, gypsum fibers, silica fibers, silica alumina fibers, zirconia fibers, boron nitride fibers, silicon nitride fibers, and boron fibers, and the like. Among them, potassium titanate whiskers and wollastonite are preferred. Here, the particle length and particle size of the acicular filler can be obtained by observing 100 randomly chosen fillers with an optical microscope, and calculating an arithmetic mean thereof. In a case where the particle size has a length and a breadth, the average particle size is calculated using the length.

The fibrous filler refers to those having an aspect ratio (average fiber length/average fiber diameter) of exceeding 150. The length of the fibrous filler (average fiber length) is preferably 0.15 mm or more, more preferably 0.2 mm or more, even more preferably 0.5 mm or more, and even more preferably 1 mm or more, and preferably 30 mm or less, more preferably 10 mm or less, and even more preferably 5 mm or less, from the viewpoint of improving flexural modulus and improving loss factor. The average fiber diameter is, but not particularly limited to, preferably 1 µm or more, and more preferably 3 µm or more, and preferably 30 µm or less, more preferably 20 µm or less, and even more preferably 10 µm or less, from the same viewpoint. In addition, the aspect ratio is preferably 200 or more, more preferably 250 or more, and even more preferably 500 or more, and preferably 10,000 or less, more preferably 5,000 or less, even more preferably 1,000 or less, and even more preferably 800 or less, from the same viewpoint.

Specific examples of the fibrous filler include, for example, glass fibers, carbon fibers, graphite fibers, metal fibers, cellulose fibers, and the like. Among them, carbon fibers and glass fibers are preferred, and glass fibers are more preferred, from the same viewpoint. Here, the fiber length and fiber diameter of the fibrous filler can be obtained by observing 100 randomly chosen fillers with an optical microscope, and calculating an arithmetic mean thereof. In a case where the fiber diameter has a length and a breadth, the average fiber diameter is calculated using the length. In addition, as the fiber diameter not only those that are in a circular form where a length and a breadth are the same, but also those having different length and breadth such as an elliptic form (for example, length/breadth =4) or an eyebrow form (for example, length/breadth =2) may be used. On the other hand, when a resin and a fibrous filler are melt-kneaded in order to prepare a resin composition using a kneader such as a twin-screw extruder, although the fibrous filler is cut with a shearing force in the kneading portion to shorten the average fiber length, the average fiber length of the fibrous filler in the resin is preferably from 100 to 800 µm, more preferably from 200 to 700 µm, and even more preferably from 300 to 600 µm, from the viewpoint of flexural modulus.

The above granular, plate-like, or acicular filler may be subjected to a coating or binding treatment with a thermoplastic resin such as an ethylene/vinyl acetate copolymer, or with a thermosetting resin such as an epoxy resin, or the filler may be treated with a coupling agent such as amino silane or epoxy silane.

These fillers can be used alone or in a combination of two or more kinds, and fillers having different shapes may be combined. Among them, from the viewpoint of improving flexural modulus and suppressing the lowering of loss factor, the filler is preferably one or more members selected from the group consisting of plate-like fillers, acicular fillers, and fibrous fillers, more preferably one or more members selected from the group consisting of plate-like fillers and acicular fillers, and even more preferably one or more members of plate-like fillers. Specifically, mica, talc, and glass fibers are preferably used, mica and talc are more preferably used, and mica is even more preferably used. The plate-like filler is oriented in the direction of flow in a molded article and the like, so that the tensile modulus in the oriented direction and the flexural modulus in a perpendicular direction to the oriented direction are remarkably improved, as compared to other fillers. Also, since there are many interfaces that influence frictions generated upon the vibrations of the molded article, it is assumed that the lowering of loss factor is further suppressed. The content of the plate-like filler is preferably 60% by mass or more, more preferably 80% by mass or more, and even more preferably 90% by mass or more, of the inorganic filler, from the viewpoint of suppressing the lowering of loss factor.

The content of the inorganic filler (C), based on 100 parts by mass of the thermoplastic polyester resin (A), is preferably 10 parts by mass or more, more preferably 15 parts by mass or more, even more preferably 20 parts by mass or more, even more preferably 30 parts by mass or more, and even more preferably 35 parts by mass or more, from the viewpoint of improving flexural modulus. In addition, the content is preferably 80 parts by mass or less, more preferably 70 parts by mass or less, even more preferably 60 parts by mass or less, even more preferably 50 parts by mass or less, and even more preferably 45 parts by mass or less, from the viewpoint of suppressing the lowering of loss factor. Here, the content of the inorganic filler refers to a total mass of the inorganic fillers used, and when plural compounds are contained, it means a total content.

In addition, in the polyester resin molding composition, the content of the inorganic filler is preferably 5% by mass or more, more preferably 10% by mass or more, even more preferably 15% by mass or more, even more preferably 20% by mass or more, and even more preferably 23% by mass or more, from the viewpoint of improving flexural modulus, and the content is preferably 40% by mass or less, more preferably 35% by mass or less, and even more preferably 30% by mass or less, from the viewpoint of suppressing the lowering of loss factor.

In the present invention, the mass ratio of the component (B) to the inorganic filler (C) (component (B) / inorganic filler (C)) is preferably from 10/90 to 60/40, more preferably from 25/75 to 50/50, and even more preferably from 40/60 to 45/55, from the viewpoint of improving the elastic modulus and improving loss factor.

### [Organic Crystal Nucleating Agent (D)]

In addition, the polyester resin molding composition of the present invention can contain an organic crystal nucleating agent, from the viewpoint of improving crystallization velocity of the thermoplastic polyester resin, improving crystallinity of the thermoplastic polyester resin, improving flexural modulus, and making crystal sizes smaller.

As the organic crystal nucleating agent, known organic crystal nucleating agents can be used, and organic metal salts of carboxylic acids, organic sulfonates, carboxylic acid amides, metal salts of phosphorus-containing compounds, metal salts of rosins, alkoxy metal salts, and organic nitrogen-containing compounds, and the like can be used. Specifically, for example, the organic metal salts of carboxylic acids include sodium benzoate, potassium benzoate, lithium benzoate, calcium benzoate, magnesium benzoate, barium benzoate, lithium terephthalate, sodium terephthalate, potassium terephthalate, calcium oxalate, sodium laurate, potassium laurate, sodium myristate, potassium myristate, calcium myristate, sodium octacosanate, calcium octacosanate, sodium stearate, potassium stearate, lithium stearate, calcium stearate, magnesium stearate, barium stearate, sodium montanate, calcium montanate, sodium toluate, sodium salicylate, potassium salicylate, zinc salicylate, aluminum dibenzoate, potassium dibenzoate, lithium dibenzoate, sodium β-naphthalate, and sodium cyclohexanecarboxylate. The organic sulfonates include sodium p-toluenesulfonate and sodium sulfoisophthalate. The carboxylic acid amides include stearamide, ethylenebis(lauric acid amide), palmitic acid amide, hydroxystearamide, erucic acid amide, and trimesic acid tris(t-butylamide). The metal salts of phosphorus-containing compounds include sodium-2,2'-methylenebis(4,6-di-t-butylphenyl) phosphate. The metal salts of rosins include sodium dehydroabietate and sodium dihydroabietate. The alkoxy metal salts include sodium 2,2-methylbis(4,6-di-t-butylphenyl). The organic nitrogen-containing compounds include ADK STAB NA-05 (trade name), manufactured by ADEKA. Other organic crystal nucleating agents include benzylidene sorbitol and derivatives thereof. Preferred are the carboxylic acid amides, the metal salts of phosphorus-containing compounds, the alkoxy metal salts, and the organic nitrogen-containing compounds, and more preferred are sodium 2,2-methylbis(4,6-di-t-butylphenyl) and ADK STAB NA-05 (trade name), from the viewpoint of suppressing the lowering of molecular weight during melt-kneading or during molding.

The content of the organic crystal nucleating agent (D), based on 100 parts by mass of the thermoplastic polyester resin (A), is preferably 0.01 parts by mass or more, more preferably 0.1 parts by mass or more, and even more preferably 0.2 parts by mass or more, from the viewpoint of improving flexural modulus and loss factor, and the content is preferably 20 parts by mass or less, more preferably 10 parts by mass or less, even more preferably 5 parts by mass or less, even more preferably 3 parts by mass or less, and even more preferably 1 part by mass or less, from the viewpoint of improving flexural modulus and loss factor. Here, in the present specification, the content of the organic crystal nucleating agent means a total content of all the organic crystal nucleating agents contained in the polyester resin molding composition.

### [Chain Extender (E)]

In addition, the polyester resin molding composition of the present invention can contain a chain extender, from the viewpoint of improving a weight-average molecular weight of the thermoplastic polyester resin, improving frictions of the molecules themselves or interactions between molecules of the thermoplastic polyester resins, improving the generated shearing frictions, and improving loss factor.

As the chain extender, a known chain extender can be used, which includes epoxy group-containing compounds, acrylic-styrenic copolymers having an epoxy group (Joncryl or ARUFON), carbodiimide compounds, isocyanate compounds, oxazoline compounds, melamine compounds, phenyl carbonate-based compounds, phenyl ester-based compounds, lactam compounds, aromatic tetracarboxylic acid anhydride, and the like. These chain extenders can be used alone or in a combination of two or more kinds.

The content of the chain extender is not particularly limited, and, for example, in a case of the carbodiimide compound, the content, based on 100 parts by mass of the thermoplastic polyester resin (A), is preferably 0.1 parts by mass or more, and more preferably 0.3 parts by mass or more, and preferably 5 parts by mass or less, and more preferably 3 parts by mass or less. In addition, in a case of the acrylic-styrene-based copolymer having an epoxy group, the content is preferably 0.1 parts by mass or more, and more preferably 0.3 parts by mass or more, and preferably 2 parts by mass or less, and more preferably 0.8 parts by mass or less.

The polyester resin molding composition of the present invention can contain, as other components besides those mentioned above, a lubricant, an inorganic crystal nucleating agent, a hydrolysis inhibitor, a flame retardant, an antioxidant, a lubricant such as a hydrocarbon-based wax or an anionic surfactant, an ultraviolet absorbent, an antistatic agent, an anti-clouding agent, a photostabilizer, a pigment, a mildewproof agent, a bactericidal agent, a blowing agent, or the like, within the range that would not impair the effects of the present invention. In addition, other polymeric materials and other resin compositions can be contained within the range that would not inhibit the effects of the present invention.

The polyester resin molding composition of the present invention can be prepared by using a raw material composition containing a thermoplastic polyester resin (A), a plasticizer and/or an elastomer (B), and an inorganic filler (C). For example, the polyester resin molding composition can be prepared by melt-kneading a raw material composition containing a thermoplastic polyester resin, a plasticizer and/or an elastomer, and an inorganic filler, and further optionally various additives with a known kneader such as a closed kneader, a single-screw or twin-screw extruder, or an open roller-type kneader, and molding a melt-kneaded product obtained in accordance with a known molding method. After melt-kneading, the melt-kneaded product may be dried or cooled in accordance with a known method. The raw materials can also be subjected to melt-kneading after homogeneously mixing the raw materials with a Henschel mixer, a super mixer or the like in advance. Here, the melt-blending may be carried out in the presence of a supercritical gas in order to accelerate plasticity of the thermoplastic polyester resin when the raw materials are melt-kneaded.

The melt-kneading temperature cannot be unconditionally determined because the melt-kneading temperature depends upon the kinds of the thermoplastic polyester resin used, and the melt-kneading temperature is preferably 220°C or higher, and preferably 300°C or lower, from the viewpoint of improving moldability and prevention of deterioration of the polyester resin molding composition. For example, as the thermoplastic polyester resin, in a case where a polybutylene terephthalate resin or a polytrimethylene terephthalate resin is used, the melt-kneading temperature is preferably 220°C or higher, more preferably 225°C or higher, and even more preferably 230°C or higher, and preferably 250°C or lower, and more preferably 245°C or lower, from the viewpoint of controlling a weight-average molecular weight of the resin molding composition obtained. In a case where a polyethylene terephthalate resin is used, the melt-kneading temperature is preferably 270°C or higher, and more preferably 275°C or higher, and preferably 290°C or lower, and more preferably 285°C or lower, from the same viewpoint. The melt-kneading time cannot be unconditionally determined because the melt-kneading time depends upon the melt-kneading temperature and the kinds of a kneader, and the melt-kneading time is preferably from 15 to 900 seconds, and more preferably from 15 to 180 seconds, from the viewpoint of controlling the weight-average molecular weight of the resin molding composition obtained.

Since the melt-kneaded product shows excellent flowability, the melt flow rate (MFR) is preferably 5 g/min or more, more preferably 8 g/min or more, and even more preferably 10 g/min or more, and preferably 150 g/min or less, more preferably 120 g/min or less, and even more preferably 100 g/min or less. Here, the melt flow rate (MFR) as used herein, when a polybutylene terephthalate resin is used as a thermoplastic polyester resin, is a value at 240°C at a load of 2.16 kg, and when a polyethylene terephthalate resin is used, the melt flow rate is a value at 280°C at a load of 2.16 kg. Specifically, the melt flow rate can be measured in accordance with a method described in Examples set forth below.

The melt-kneaded product thus obtained has excellent flowability, so that the melt-kneaded product can be suitably prepared as a vibration-damping material used in manufactured articles such as audio equipment, electric appliances, construction buildings, and industrial equipment, or parts or housing thereof, by using various mold-processing methods such as injection molding, extrusion molding or thermoforming.

For example, when the vibration-damping material containing the polyester resin molding composition of the present invention is prepared by injection molding, the vibration-damping material is obtained by filling pellets of the above polyester resin molding composition in an injection-molding machine, and injecting molten pellets into a mold to mold.

In the injection molding, a known injection-molding machine can be used, including, for example, a machine comprising a cylinder and a screw inserted through an internal thereof as main constituting elements [J75E-D, J1 10AD-180H manufactured by The Japan Steel Works, Ltd. or the like]. Here, although the raw materials for the above-mentioned polyester resin molding composition may be supplied to a cylinder and directly melt-kneaded, it is preferable that a product previously melt-kneaded is filled in an injection-molding machine.

The set temperature of the cylinder is preferably 220°C or higher, and more preferably 230°C or higher, from the viewpoint of controlling crystallinity of the resin molding composition obtained, and from the viewpoint of maintaining a weight-average molecular weight of the resin molding composition. Also, the set temperature is preferably 290°C or lower, more preferably 280°C or lower, even more preferably 270°C or lower, and even more preferably 260°C or lower. In addition, although the residence time within the cylinder cannot be unconditionally determined because the residence time depends upon the setting temperature of the cylinder and the kinds of the kneader, the residence time is preferably from 180 to 1,200 seconds, and more preferably from 300 to 600 seconds, from the viewpoint of maintaining a weight-average molecular weight of the resin molding composition.

When a melt-kneader is used, the set temperature means a set temperature of the cylinder of the kneader during melt-kneading. Here, the cylinder comprises some heaters, by which temperature control is carried out. The number of heaters cannot be unconditionally determined because the number depends on the kinds of machines, and it is preferable that the heaters controlled to the above-mentioned set temperature are present at least at the discharge outlet side of the melt-kneaded product, i.e. the side of tip end of nozzle.

The mold temperature cannot be unconditionally determined because the mold temperature depends upon the kinds of the thermoplastic polyester resin used. For example, in a case of a polybutylene terephthalate resin, the mold temperature is preferably 150°C or lower, more preferably 140°C or lower, and even more preferably 130°C or lower, from the viewpoint of improving the crystallization velocity of the polyester resin molding composition of the present invention and improving operability, and from the viewpoint of controlling absolute degree of crystallinity of the polyester resin molding composition of the present invention. Further, the mold temperature is even more preferably 80°C or lower, from the viewpoint of improving loss factor. Although the lower limit of the mold temperature is not particularly set, it is preferably, for example, 20°C or higher. The holding time inside the mold cannot be unconditionally determined because the holding time differs depending upon the temperature of the mold. The holding time is preferably from 5 to 100 seconds, from the viewpoint of improving productivity of the molded article. For example, in a case where a mold at a temperature of 80°C is used, if molding is carried out for 5 to 60 seconds, a resin molding composition having an absolute degree of crystallinity described later is obtained.

Although the relationships among the mold temperature and the molding time and the absolute degree of crystallinity cannot be unconditionally determined, the higher the temperature of the mold, the longer the molding time, and the higher the absolute degree of crystallinity; and the lower the temperature of the mold, the shorter the molding time, and the lower the absolute degree of crystallinity.

In addition, when a molding method other than the injection molding is used, molding may be carried out in accordance with a known method without particular limitations. It is preferable that the mold temperature is also set within the temperature range mentioned above.

For example, when a vibration-damping material containing a polyester resin molding composition of the present invention is prepared by press molding, specifically, a vibration-damping material can be obtained by subjecting a melt-kneaded product before molding of the above polyester resin molding composition to frame press-molding with a frame having a desired shape.

The mold temperature and pressure for the press molding are such that, from the viewpoint of controlling absolute degree of crystallinity of the polyester resin molding composition of the present invention, in a case where a polybutylene terephthalate resin is used as a thermoplastic polyester resin, it is preferable that press is carried out under the conditions of preferably from 0° to 240°C and 5 to 30 MPa, more preferably under the conditions of from 10° to 150°C and 10 to 25 MPa, and even more preferably under the conditions of from 12° to 100°C and 10 to 22 MPa. In a case where a polytrimethylene terephthalate resin is used, it is preferable that press is carried out preferably under the conditions of from 0° to 200°C and 5 to 30 MPa, more preferably under the conditions of from 10° to 150°C and 10 to 25 MPa, and even more preferably under the conditions of from 15° to 80°C and 10 to 20 MPa. Alternatively, in a case where a polyethylene terephthalate resin is used as a thermoplastic polyester resin, it is preferable that press is carried out preferably under the conditions of from 0° to 240°C and 5 to 30 MPa, more preferably under the conditions of from 10° to 200°C and 10 to 25 MPa, and even more preferably under the conditions of from 15° to 190°C and 10 to 22 MPa. The press time cannot be unconditionally determined because the press time depends upon the temperature and pressure of the press, and the press time is preferably 1 minute or more, and preferably 10 minutes or less, more preferably 7 minutes or less, and even more preferably 5 minutes or less, from the viewpoint of controlling absolute degree of crystallinity of the polyester resin molding composition of the present invention.

Thus, the polyester resin molding composition of the present invention is obtained. The polyester resin molding composition of the present invention is characterized in that the polyester resin molding composition contains specified raw materials mentioned above, and in the present invention, the polyester resin molding composition has one feature of satisfying one or both of the following (i) and (ii):
(i) a weight-average molecular weight (Mw) is 50,000 or more and 150,000 or less, and an absolute degree of crystallinity (Xc) is 5% or more, and
(ii) a weight-average molecular weight (Mw) is 150,000 or less, and an absolute degree of crystallinity (Xc) is 5% or more and 37% or less,
from the viewpoint of constituting a vibration-damping material having excellent vibration-damping properties and heat resistance.

The upper limit of the weight-average molecular weight (Mw) of the polyester resin molding composition of the present invention may be 150,000 or less. Although the value of the upper limit would not change depending upon the kinds of the thermoplastic polyester resins used, for example, in a case where a polybutylene terephthalate resin is used, the lower limit is preferably 70,000 or more, more preferably 80,000 or more, and even more preferably 100,000 or more. In a case where a polytrimethylene terephthalate resin is used, the lower limit is preferably 60,000 or more, and more preferably 70,000 or more. In a case where a polyethylene terephthalate resin is used, the lower limit is preferably 30,000 or more, more preferably 40,000 or more, and even more preferably 50,000 or more. Here, since the polyester resin molding composition of the present invention has an absolute degree of crystallinity as described later, the lower limit would differ depending upon the values of the absolute degree of crystallinity (Xc). If the absolute degree of crystallinity is 5% or more and 37% or less, performance can be exhibited even when the weight-average molecular weight is less than 50,000, including, for example, 20,000 or more. When an absolute degree of crystallinity exceeds 37%, the weight-average molecular weight is 50,000 or more. Here, the weight-average molecular weight of the resin molding composition as used herein does not substantially fluctuate before and after molding, so that, for example, a measurement may be taken with a resin composition before molding. More specifically, the weight-average molecular weight can be measured in accordance with a method described in Examples set forth below.

The lower limit for the absolute degree of crystallinity (Xc) of the polyester resin molding composition of the present invention may be 5% or more, and the following ranges may be shown depending upon the kinds of the thermoplastic polyester resins used, from the viewpoint of improving loss factor. For example, in a case where a polybutylene terephthalate resin is used, the lower limit is preferably 10% or more, more preferably 15% or more, even more preferably 20% or more, and even more preferably 25% or more, and preferably 35% or less, more preferably 30% or less, and even more preferably 28% or less. In a case where a polytrimethylene terephthalate resin is used, the lower limit is preferably 10% or more, more preferably 15% or more, and even more preferably 20% or more, and preferably 35% or less. In a case where a polyethylene terephthalate resin is used, the lower limit is preferably 10% or more, more preferably 15% or more, even more preferably 20% or more, and even more preferably 25% or more, and preferably 35% or less. Here, since the polyester resin molding composition of the present invention has a weight-average molecular weight mentioned above, the value of the absolute degree of crystallinity differs depending upon the value of the weight-average molecular weight (Mw). Specifically, if a weight-average molecular weight is 50,000 or more and 150,000 or less, performance can be exhibited even when the absolute degree of crystallinity exceeds 37%, and the upper limit, for example, includes 40% or less. If a weight-average molecular weight is less than 50,000, the absolute degree of crystallinity is 37% or less. Here, the absolute degree of crystallinity as used herein means a proportion of the crystalline portions in the matrix resin, which can be measured in accordance with a method described in Examples set forth below.

In addition, it is preferable that the polyester resin molding composition of the present invention has a weight-average molecular weight and an absolute degree of crystallinity within the ranges as defined above. The combinations thereof are such that in a case of a polybutylene terephthalate resin, preferred are one having a weight-average molecular weight of 70,000 or more and 150,000 or less and an absolute degree of crystallinity of 25% or more and 35% or less, and more preferred are one having a weight-average molecular weight of 100,000 or more and 150,000 or less and an absolute degree of crystallinity of 25% or more and 35% or less. In a case of a polyethylene terephthalate resin, preferred are a weight-average molecular weight of 30,000 or more and 150,000 or less and an absolute degree of crystallinity of 10% or more and 35% or less, and more preferred are a weight-average molecular weight of 40,000 or more and 150,000 or less and an absolute degree of crystallinity of 20% or more and 35% or less.

Here, the polyester resin molding composition of the present invention preferably has a smaller size for the crystalline portions in the matrix, from the viewpoint of exhibiting excellent vibration-damping property, and the size of the crystalline portions is preferably 100 µm or less, more preferably 20 µm or less, even more preferably 5 µm or less, still even more preferably 1 µm or less, and still even more preferably 500 nm or less. Although the lower limit is not particularly limited, the lower limit is preferably 1 nm or more. The size of the crystalline portions as used herein means an average particle size of spherical crystals existing in the matrix resin, which can be measured with an AFM, a TEM, or a polarized microscope.

In addition, the polyester resin molding composition of the present invention preferably has a broader molecular weight distribution Mw/Mn (weight-average molecular weight/number-average molecular weight) in the matrix, from the viewpoint of exhibiting excellent vibration-damping property, and the molecular weight distribution is preferably 1.5 or more, more preferably 1.8 or more, and even more preferably 2.0 or more. Although the upper limit is not particularly limited, the upper limit is preferably 10 or less. In order to broaden the molecular weight distribution, a polyester resin richly containing high-molecular weight components and a polyester resin richly containing low-molecular weight components can be mixed and used. Mn (number-average molecular weight) and the molecular weight distribution Mw/Mn (weight-average molecular weight/number-average molecular weight) can be measured under the same conditions as the weight-average molecular weight described later. Here, when plural peaks or shoulder portions are recognized, it is considered as a molecular weight distribution of a polyester resin of a single peak.

The polyester resin molding composition of the present invention can be suitably used as vibration-damping materials used in manufactured articles such as audio equipment, electric appliances, construction buildings, and industrial equipment, or parts or housing thereof. In addition, since the polyester resin molding composition of the present invention has a high flexural modulus even as a single material, the polyester resin molding composition has an excellent vibration-damping property of being capable of sufficiently keeping the shape with a single material without having to use a high-rigidity material such as a metal steel plate, and can be preferably used in manufactured articles that are required to be light-weighted of automobiles, railcars, airplanes, or the like, or parts or housing thereof.

The applications of the polyester resin molding composition of the present invention to manufactured articles such as audio equipment, electric appliances, transportation vehicles, construction buildings, and industrial equipment, or parts or housings thereof can be appropriately set according to the methods for producing parts, housings, apparatuses, and equipment, applied parts, and intended purposes, and the polyester resin molding composition can be used in accordance with a conventional method in the art.

The polyester resin molding composition of the present invention can be used for speakers, television, radio cassette recorders, headphones, audio components, microphones, audio players, compact disc players, floppy(registered trademark), video players, etc. as materials for audio equipment housings; further electromotive tools such as electromotive drills and electromotive drivers, electric appliances with cooling fans such as computers, projectors, servers, and POS systems, washing machines, clothes dryers, air-conditioned indoor units, sewing machines, dishwashers, fan heaters, multifunctional photocopier machines, printers, scanners, hard disk drives, video cameras, humidifiers, air cleaners, cellular phones, dryers, fan, etc. as materials for parts and housings of electric appliances with electromotive motors; electromotive toothbrushes, electromotive shavers, massaging machines, etc. as materials for parts and housings of vibrated source-containing electric appliances; generators, gas generators, etc. as materials for parts and housings of electric appliances with motors; refrigerators, automatic vending machines, air-conditioned external machines, dehumidifiers, domestic generators etc. as materials for parts and housings of electric appliances with compressors; materials for interior materials such as dashboards, instrumental panels, floor, doors, and roofs, engine-related materials such as oil pans, front cover, and locker cover, car navigation, door trim, gear box, dash silencer, module carrier, etc. as materials for automobile parts; soundproof plates, road lighting luminaires, ETC (Electronic Toll Collection) facility members, etc. as materials for roads; interior materials such as floor, walls, side plates, ceiling, doors, chairs, and tables, housings or parts of motor-related area, gear case, pantagraph covers, various protective covers, etc. as materials for railcar parts; interior materials such as floor, walls, side plates, ceiling, chairs, and tables, housings or parts in the engine-related parts etc. as materials for airplane parts; housings or wall materials for engine room, housings or wall materials for instrumental measurement room, as materials for ship parts; walls, ceiling, floor, partition boards, soundproof walls, shutters, curtain rails, pipe ducts, staircases, doors, window frames, etc. as materials for construction; shooters, elevators (lifts), winches or hoists, escalators, conveyors, tractors, bulldozers, lawn mowers, etc. as materials for industrial equipment parts; respiratory organ-associated equipment, ear, nose and throat (ENT)-associated equipment, dental equipment, surgical equipment, etc. as materials for parts and housing of medical equipment, and the like.

The present invention also provides a method for producing a polyester resin molding composition of the present invention.

The method for production is not particularly limited so long as a polyester resin molding composition of the present invention uses raw materials as mentioned above, and the polyester resin molding composition satisfies one or both selected from the following (i) and (ii):
(i) a weight-average molecular weight (Mw) is 50,000 or more and 150,000 or less, and an absolute degree of crystallinity (Xc) is 5% or more; and
(ii) a weight-average molecular weight (Mw) is 150,000 or less, and an absolute degree of crystallinity (Xc) is 5% or more and 37% or less. Steps can be properly added depending upon the kinds of the molded article obtained.

Specifically, the method includes two embodiments, for example, and an embodiment A includes the following steps:
step (A-1): melt-kneading raw materials containing a thermoplastic polyester resin (A) constituted of a dicarboxylic acid component and a diol component, a plasticizer and/or an elastomer (B), and an inorganic filler (C), to prepare a melt-kneaded product having a weight-average molecular weight (Mw) of 50,000 or more and 150,000 or less; and
step (A-2): molding a melt-kneaded product obtained in the step (A-1), to provide a molded article having an absolute degree of crystallinity (Xc) of 5% or more.

In addition, as another embodiment, for example, an embodiment B includes the following steps:
step (B-1): melt-kneading raw materials containing a thermoplastic polyester resin (A) constituted of a dicarboxylic acid component and a diol component, a plasticizer and/or an elastomer (B), and an inorganic filler (C), to prepare a melt-kneaded product having a weight-average molecular weight (Mw) of 150,000 or less; and
step (B-2): molding a melt-kneaded product obtained in the step (B-1), to provide a molded article having an absolute degree of crystallinity (Xc) of 5% or more and 37% or less.

The step (A-1) and the step (B-1) are a step to prepare a melt-kneaded product of a polyester resin molding composition. Specifically, raw materials containing a thermoplastic polyester resin (A), a plasticizer and/or an elastomer (B), and an inorganic filler (C), and optionally various additives are melt-kneaded at a temperature of preferably 220°C or higher, and preferably 300°C or lower, and the melt-kneading temperature and the melt-kneading time are adjusted so that the resulting melt-kneaded product has a desired weight-average molecular weight. For example, when a polybutylene terephthalate resin or a polytrimethylene terephthalate resin is used as the thermoplastic polyester resin, the melt-kneading temperature is preferably 220°C or higher, more preferably 225°C or higher, and even more preferably 230°C or higher, and preferably 250°C or lower, and more preferably 245 °C or lower, from the viewpoint of controlling a weight-average molecular weight of the resulting resin molding composition. Alternatively, when a polyethylene terephthalate resin is used, the melt-kneading temperature is preferably 270°C or higher, and more preferably 275°C or higher, and preferably 290°C or lower, and more preferably 285°C or lower, from the same viewpoint. The melt-kneading time cannot be unconditionally determined because the melt-kneading time depends upon the melt-kneading temperature and the kinds of the kneader, and the melt-kneading time is preferably from 15 to 900 seconds, and more preferably from 15 to 180 seconds.

The step (A-2) and the step (B-2) are a step of molding a melt-kneaded product of the polyester resin molding composition. Specifically, in a case where a molded article is obtained by press molding, when a polybutylene terephthalate resin or a polytrimethylene terephthalate resin is used as a thermoplastic polyester resin, a melt-kneaded product obtained in the step (A-1) or the step (B-1) is pressed preferably under the conditions of from 0° to 240°C and 5 to 30 MPa, more preferably under the conditions from 10° to 150°C and 10 to 25 MPa, and even more preferably under the conditions from 15° to 80°C and 10 to 20 MPa. Alternatively, when a polyethylene terephthalate resin is used as a thermoplastic polyester resin, the melt-kneaded product is pressed preferably under the conditions of from 0° to 240°C and 5 to 30 MPa, more preferably under the conditions of from 10° to 150°C and 10 to 25 MPa, and even more preferably under the conditions of from 15° to 80°C and 10 to 20 MPa. The press time cannot be unconditionally determined because the press time depends upon the temperature and the pressure of the press, and the press time is preferably 1 minute or longer, and preferably 10 minutes or shorter, more preferably 7 minutes or shorter, and even more preferably 5 minutes or shorter, from the viewpoint of controlling the absolute degree of crystallinity of the polyester resin molding composition of the present invention.

The polyester resin molding composition of the present invention thus obtained can be suitably used as a vibration-damping material.

With respect to the above-mentioned embodiments, the present invention further discloses the following polyester resin molding compositions, and uses thereof.
<1> A polyester resin molding composition for vibration-damping material containing:
   a thermoplastic polyester resin (A) constituted of a dicarboxylic acid component and a diol component,
   a plasticizer and/or an elastomer (B), and
   an inorganic filler (C),
   wherein the polyester resin molding composition satisfies one or both selected from the following (i) and (ii):
      (i) a weight-average molecular weight (Mw) is 50,000 or more and 150,000 or less, and an absolute degree of crystallinity (Xc) is 5% or more; and
      (ii) a weight-average molecular weight (Mw) is 150,000 or less, and an absolute degree of crystallinity (Xc) is 5% or more and 37% or less.
<2> The polyester resin molding composition according to the above <1>, wherein the dicarboxylic acid component constituting the thermoplastic polyester resin (A) is one or more members selected from the group consisting of aliphatic dicarboxylic acids, alicyclic dicarboxylic acids, aromatic dicarboxylic acids, and dicarboxylic acids having a furan structure.
<3> The polyester resin molding composition according to the above <1> or <2>, wherein the diol component constituting the thermoplastic polyester resin (A) is one or more members selected from the group consisting of aliphatic diols, alicyclic diols, aromatic diols, and diols having a furan ring.
<4> The polyester resin molding composition according to any one of the above <1> to <3>, wherein in a case where the dicarboxylic acid component constituting the thermoplastic polyester resin (A) is one or more members selected from the group consisting of aromatic dicarboxylic acids, alicyclic dicarboxylic acids, and dicarboxylic acids having a furan, preferred are combinations thereof with one or more members selected from the group consisting of aliphatic diols, aromatic diols, alicyclic diols, and diols having a furan ring, and more preferred are combinations thereof with one or more members selected from the group consisting of aliphatic diols and aromatic diols.
<5> The polyester resin molding composition according to any one of the above <1> to <3>, wherein in a case where the dicarboxylic acid component constituting the thermoplastic polyester resin (A) is an aliphatic dicarboxylic acid, preferred are combinations thereof with one or more members selected from the group consisting of aromatic diols, alicyclic diols, and diols having a furan ring, and more preferred are combinations thereof with one or more aromatic diols.
<6> The polyester resin molding composition according to any one of the above <1> to <5>, wherein as the dicarboxylic acid component constituting the thermoplastic polyester resin (A), one or more members selected from the group consisting of succinic acid, glutaric acid, adipic acid, cyclohexanedicarboxylic acid, terephthalic acid, isophthalic acid, phthalic acid, 1,4-naphthalenedicarboxylic acid, 1,5-naphthalenedicarboxylic acid, 2,6-naphthalenedicarboxylic acid, 1,8-naphthalenedicarboxylic acid, and 2,5-furandicarboxylic acid are preferred, one or more members selected from the group consisting of succinic acid, cyclohexanedicarboxylic acid, terephthalic acid, isophthalic acid, 2,6-naphthalenedicarboxylic acid, and 2,5-furandicarboxylic acid are more preferred, and one or more members selected from the group consisting of terephthalic acid and 2,5-furandicarboxylic acid are even more preferred.
<7> The polyester resin molding composition according to any one of the above <1> to <6>, wherein as the diol component constituting the thermoplastic polyester resin (A), one or more members selected from the group consisting of ethylene glycol, 1,3-propanediol, 1,4-butanediol, cyclohexanedimethanol, hydrogenated bisphenol A, isosorbide, bisphenol A, an alkylene oxide adduct of bisphenol A, 1,3-benzenedimethanol, 1,4-benzenedimethanol, and 2,5-dihydroxyfuran are preferred, and one or more members selected from the group consisting of ethylene glycol, 1,3-propanediol, 1,4-butanediol, cyclohexanedimethanol, hydrogenated bisphenol A, and 2,5-dihydroxyfuran are more preferred.
<8> The polyester resin molding composition according to any one of the above <1> to <7>, wherein the thermoplastic polyester resin (A) has a glass transition temperature (Tg) of preferably 20°C or higher, more preferably 25°C or higher, even more preferably 30°C or higher, and still even more preferably 35°C or higher, and preferably 160°C or lower, more preferably 150°C or lower, even more preferably 140°C or lower, and still even more preferably 130°C or lower.
<9> The polyester resin molding composition according to any one of the above <1> to <8>, wherein the thermoplastic polyester resin (A) has crystallization enthalpy ΔHmc obtained from areas of exothermic peaks along with crystallization of preferably 5 J/g or more, more preferably 10 J/g or more, even more preferably 15 J/g or more, and even more preferably 30 J/g or more, when a resin is heated from 25°C to 300°C at a heating rate of 20°C/min, held in that state for 5 minutes, and thereafter cooled to 25°C or lower at a rate of -20°C/min.
<10> The polyester resin molding composition according to any one of the above <1> to <9>, wherein the thermoplastic polyester resin (A) is preferably a polyethylene terephthalate constituted of terephthalic acid and ethylene glycol, a polytrimethylene terephthalate constituted of terephthalic acid and 1,3-propanediol, a polybutylene terephthalate constituted of terephthalic acid and 1,4-butanediol, 1,4-cyclohexanedimethylene terephthalate constituted of terephthalic acid and 1,4-cyclohexanedimethanol, polyethylene naphthalate constituted of 2,6-naphthalenedicarboxylic acid and ethylene glycol, a polybutylene naphthalate constituted of 2,6-naphthalenedicarboxylic acid and 1,4-butanediol, a polyethylene furanoate constituted of 2,5-furandicarboxylic acid and ethylene glycol, and a polybutylene furanoate constituted of 2,5-furandicarboxylic acid and 1,4-butanediol, and more preferably a polyethylene terephthalate constituted of terephthalic acid and ethylene glycol, a polytrimethylene terephthalate constituted of terephthalic acid and 1,3-propanediol, a polybutylene terephthalate constituted of terephthalic acid and 1,4-butanediol, a polyethylene naphthalate constituted of 2,6-naphthalenedicarboxylic acid and ethylene glycol, and a polyethylene furanoate constituted of 2,5-furandicarboxylic acid and ethylene glycol.
<11> The polyester resin molding composition according to any one of the above <1> to <10>, wherein the content of the thermoplastic polyester resin (A) in the polyester resin molding composition is preferably 50% by mass or more, more preferably 55% by mass or more, and even more preferably 60% by mass or more, and preferably 90% by mass or less, more preferably 80% by mass or less, even more preferably 75% by mass or less, and even more preferably 70% by mass or less.
<12> The polyester resin molding composition according to any one of the above <1> to <11>, wherein it is preferable that the plasticizer contains one or more members selected from the group consisting of polyester-based plasticizers, polyhydric alcohol ester-based plasticizers, polycarboxylic acid ester-based plasticizers, and compounds represented by the general formula (I).
<13> The polyester resin molding composition according to any one of the above <1> to <12>, wherein the plasticizer preferably contains one or more members selected from the group consisting of polyester-based plasticizers, polyhydric alcohol ester-based plasticizers, polycarboxylic acid ester-based plasticizers, each having a (poly)oxyalkylene group or an alkylene group having from 2 to 10 carbon atoms, and compounds represented by the general formula (I), and more preferably one or more members selected from the group consisting of polyester-based plasticizers, polyhydric alcohol ester-based plasticizers, polycarboxylic acid ester-based plasticizers, each having a (poly)oxyalkylene group, and compounds represented by the general formula (I).
<14> The polyester resin molding composition according to any one of the above <1> to <13>, wherein the plasticizer preferably contains one or more members selected from the group consisting of the following Compound Groups (A) to (C), and more preferably one or more members selected from the group consisting of the following Compound Groups (A) and (B).
   Compound Group (A): an ester compound having two or more ester groups in the molecule, wherein at least one kind of the alcohol component constituting the ester compound is an adduct of an alcohol reacted with an alkylene oxide having from 2 to 3 carbon atoms in an amount of from 0.5 to 5 mol on average, per one hydroxyl group;
   Compound Group (B): a compound represented by the formula (II):

      R⁵O-CO-R⁶-CO-[(OR⁷)ₘO-CO-R⁶-CO-]ₙOR⁵ (II)

      wherein R⁵ is an alkyl group having from 1 to 4 carbon atoms; R⁶ is an alkylene group having from 2 to 4 carbon atoms; R⁷ is an alkylene group having from 2 to 6 carbon atoms, m is the number of from 1 to 6, and n is the number of from 1 to 12, with proviso that all of R⁶'s may be identical or different, and that all of R⁷'s may be identical or different; and
   Compound Group (C): an ester compound having two or more ester groups in the molecule, wherein the alcohol component constituting the ester compound is a mono-alcohol.
<15> The polyester resin molding composition according to any one of the above <12> to <14>, wherein the content of one or more members selected from the group consisting of polyester-based plasticizers, polyhydric alcohol ester-based plasticizers, polycarboxylic acid ester-based plasticizers, and compounds represented by the general formula (I), preferably the content of one or more members selected from the group consisting of polyester-based plasticizers, polyhydric alcohol ester-based plasticizers, polycarboxylic acid ester-based plasticizers, each having a (poly)oxyalkylene group or an alkylene group having from 2 to 10 carbon atoms, and compounds represented by the general formula (I), and more preferably the content of one or more members selected from the group consisting of polyester-based plasticizers, polyhydric alcohol ester-based plasticizers, polycarboxylic acid ester-based plasticizers, each having a (poly)oxyalkylene group, and compounds represented by the general formula (I), and the content of one or more compounds selected from the group consisting of Compound Groups (A) to (C) mentioned above, is preferably 50% by mass or more, more preferably 80% by mass or more, even more preferably 90% by mass or more, even more preferably 95% by mass or more, even more preferably substantially 100% by mass, and even more preferably 100% by mass, of the plasticizer.
<16> The polyester resin molding composition according to any one of the above <1> to <15>, wherein the content of the plasticizer, based on 100 parts by mass of the thermoplastic polyester resin (A), is preferably 0.5 parts by mass or more, more preferably 1 part by mass or more, even more preferably 3 parts by mass or more, even more preferably 5 parts by mass or more, even more preferably 10 parts by mass or more, even more preferably 15 parts by mass or more, and even more preferably 18 parts by mass or more, and preferably 50 parts by mass or less, more preferably 40 parts by mass or less, even more preferably 30 parts by mass or less, and even more preferably 25 parts by mass or less.
<17> The polyester resin molding composition according to any one of the above <1> to <16>, wherein the content of the plasticizer in the polyester resin molding composition is preferably 1% by mass or more, more preferably 3% by mass or more, even more preferably 5% by mass or more, and even more preferably 6% by mass or more, and preferably 25% by mass or less, more preferably 20% by mass or less, and even more preferably 15% by mass or less.
<18> The polyester resin molding composition according to any one of the above <1> to <17>, wherein the elastomer is preferably a thermoplastic elastomer, more preferably a styrenic elastomer, and even more preferably a styrene-isoprene block copolymer and/or a styrene-butadiene block copolymer.
<19> The polyester resin molding composition according to the above <18>, wherein the styrene-isoprene block copolymer is a block copolymer that has a polystyrene block at both the terminals, and at least one of the blocks of polyisoprene block or vinyl-polyisoprene block between the terminals.
<20> The polyester resin molding composition according to any one of the above <1> to <19>, wherein as the elastomer, polystyrene-isoprene block copolymers, polystyrene-polybutadiene copolymers, polystyrene-hydrogenated polybutadiene copolymers, polystyrene-hydrogenated polyisoprene-polystyrene block copolymers, polystyrene-vinyl-polyisoprene-polystyrene block copolymers, polystyrene-hydrogenated polybutadiene-hydrogenated polyisoprene-polystyrene block copolymers, and polystyrene-hydrogenated polybutadiene-polyisoprene-polystyrene block copolymers are preferred, and the polystyrene-vinyl-polyisoprene-polystyrene block copolymers are more preferred.
<21> The polyester resin molding composition according to any one of the above <18> to <21>, wherein the styrene content in the styrenic elastomer is preferably 10% by mass or more, and more preferably 15% by mass or more, and preferably 30% by mass or less, and more preferably 25% by mass or less.
<22> The polyester resin molding composition according to any one of the above <18> to <21>, wherein the thermoplastic elastomer has a glass transition temperature Tg of preferably -40 °C or higher, and preferably 20°C or lower.
<23> The polyester resin molding composition according to any one of the above <18> to <22>, wherein the content of the thermoplastic elastomer, based on 100 parts by mass of the thermoplastic polyester resin (A), is preferably 10 parts by mass or more, more preferably 15 parts by mass or more, even more preferably 18 parts by mass or more, even more preferably 20 parts by mass or more, and even more preferably 25 parts by mass or more, and preferably 50 parts by mass or less, more preferably 40 parts by mass or less, and even more preferably 35 parts by mass or less.
<24> The polyester resin molding composition according to any one of the above <18> to <23>, wherein the content of the thermoplastic elastomer in the polyester resin molding composition is preferably 5% by mass or more, more preferably 10% by mass or more, and even more preferably 15% by mass or more, and preferably 30% by mass or less, more preferably 25% by mass or less, and even more preferably 20% by mass or less.
<25> The polyester resin molding composition according to any one of the above <1> to <24>, wherein the plasticizer and the elastomer may be used together, or the plasticizer which may be used alone or in two or more kinds, can be used in a combination with an elastomer which may be used alone or in two or more kinds.
<26> The polyester resin molding composition according to the above <25>, wherein a total content of the plasticizer and the elastomer, based on 100 parts by mass of the thermoplastic polyester resin (A), is preferably 15 parts by mass or more, more preferably 20 parts by mass or more, and even more preferably 25 parts by mass or more, and preferably 60 parts by mass or less, more preferably 50 parts by mass or less, and even more preferably 40 parts by mass or less.
<27> The polyester resin molding composition according to the above <25> or <26>, wherein the mass ratio of the plasticizer to the elastomer, i.e. plasticizer/elastomer, is preferably from 30/70 to 70/30, and more preferably from 40/60 to 60/40.
<28> The polyester resin molding composition according to any one of the above <1> to <27>, wherein it is preferable that the inorganic filler (C) contains one or more members selected from the group consisting of plate-like fillers, granular fillers, acicular fillers, and fibrous fillers.
<29> The polyester resin molding composition according to the above <28>, wherein the plate-like filler has an aspect ratio (length of the longest side of the largest surface of the plate-like filler/thickness of the surface) of 20 or more and 150 or less, and wherein the plate-like filler is preferably glass flake, non-swellable mica, swellable mica, graphite, metal foil, talc, clay, mica, sericite, zeolite, bentonite, organic modified bentonite, montmorillonite, organic modified montmorillonite, dolomite, smectite, hydrotalcite, plate-like iron oxide, plate-like calcium carbonate, plate-like magnesium hydroxide, and plate-like barium sulfate, more preferably talc, mica, and plate-like barium sulfate, and even more preferably talc and mica.
<30> The polyester resin molding composition according to the above <28>, wherein the granular filler has an aspect ratio (longest diameter of the granular filler/shortest diameter of the granular filler) of 1 or more and less than 2, and one having an aspect ratio of nearly 1 is preferred, and wherein the granular filler is preferably kaolin, fine silicic acid powder, feldspar powder, granular calcium carbonate, granular magnesium hydroxide, granular barium sulfate, aluminum hydroxide, magnesium carbonate, calcium oxide, aluminum oxide, magnesium oxide, titanium oxide, aluminum silicate, various balloons, various beads, silicon oxide, gypsum, novaculite, dawsonite, and white clay, more preferably granular barium sulfate, aluminum hydroxide, and granular calcium carbonate, and even more preferably granular calcium carbonate and granular barium sulfate.
<31> The polyester resin molding composition according to the above <28>, wherein the acicular filler has an aspect ratio (particle length/particle size) within the range of 2 or more and less than 20, and wherein the acicular filler is preferably potassium titanate whiskers, aluminum borate whiskers, magnesium-based whiskers, silicon-based whiskers, wollastonite, sepiolite, asbestos, zonolite, phosphate fibers, ellestadite, slag fibers, gypsum fibers, silica fibers, silica alumina fibers, zirconia fibers, boron nitride fibers, silicon nitride fibers, and boron fibers, and more preferably potassium titanate whiskers and wollastonite.
<32> The polyester resin molding composition according to the above <28>, wherein the fibrous filler has an aspect ratio (average fiber length/average fiber diameter) of exceeding 150, and wherein the fibrous filler is preferably glass fibers, carbon fibers, graphite fibers, metal fibers, and cellulose fibers, more preferably carbon fibers and glass fibers, and even more preferably glass fibers.
<33> The polyester resin molding composition according to any one of the above <28> to <31>, wherein the granular, plate-like, or acicular filler may be subjected to a coating or binding treatment with a thermoplastic resin such as an ethylene/vinyl acetate copolymer, or with a thermosetting resin such as an epoxy resin, or the filler may be treated with a coupling agent such as amino silane or epoxy silane.
<34> The polyester resin molding composition according to any one of the above <1> to <33>, wherein the inorganic filler (C) is preferably one or more members selected from the group consisting of plate-like fillers, acicular fillers, and fibrous fillers, more preferably one or more members selected from the group consisting of plate-like fillers and acicular fillers, and even more preferably one or more members of plate-like fillers.
<35> The polyester resin molding composition according to any one of the above <1> to <34>, wherein mica, talc, and glass fibers are preferably used, mica and talc are more preferably used, and mica is even more preferably used.
<36> The polyester resin molding composition according to any one of the above <28> to <35>, wherein the content of the plate-like filler is preferably 60% by mass or more, more preferably 80% by mass or more, and even more preferably 90% by mass or more, of the inorganic filler (C).
<37> The polyester resin molding composition according to any one of the above <1> to <36>, wherein the content of the inorganic filler (C), based on 100 parts by mass of the thermoplastic polyester resin (A), is preferably 10 parts by mass or more, more preferably 15 parts by mass or more, even more preferably 20 parts by mass or more, even more preferably 30 parts by mass or more, and even more preferably 35 parts by mass or more, and preferably 80 parts by mass or less, more preferably 70 parts by mass or less, even more preferably 60 parts by mass or less, even more preferably 50 parts by mass or less, and even more preferably 45 parts by mass or less.
<38> The polyester resin molding composition according to any one of the above <1> to <37>, wherein in the polyester resin molding composition, the content of the inorganic filler is preferably 5% by mass or more, more preferably 10% by mass or more, even more preferably 15% by mass or more, even more preferably 20% by mass or more, and even more preferably 23% by mass or more, and preferably 40% by mass or less, more preferably 35% by mass or less, and even more preferably 30% by mass or less.
<39> The polyester resin molding composition according to any one of the above <1> to <38>, wherein the mass ratio of the component (B) to the inorganic filler (C) (component (B) / inorganic filler (C)) is preferably from 10/90 to 60/40, more preferably from 25/75 to 50/50, and even more preferably from 40/60 to 45/55.
<40> The polyester resin molding composition according to any one of the above <1> to <39>, further containing an organic crystal nucleating agent (D).
<41> The polyester resin molding composition according to the above <40>, wherein the content of the organic crystal nucleating agent (D), based on 100 parts by mass of the thermoplastic polyester resin (A), is preferably 0.01 parts by mass or more, more preferably 0.1 parts by mass or more, and even more preferably 0.2 parts by mass or more, and preferably 20 parts by mass or less, more preferably 10 parts by mass or less, even more preferably 5 parts by mass or less, even more preferably 3 parts by mass or less, and even more preferably 1 part by mass or less.
<42> The polyester resin molding composition according to any one of the above <1> to <41>, further containing a chain extender (E).
<43> The polyester resin molding composition according to the above <42>, wherein the content of the chain extender (E), in a case of a carbodiimide compound, based on 100 parts by mass of the thermoplastic polyester resin (A), is preferably 0.1 parts by mass or more, and more preferably 0.3 parts by mass or more, and preferably 5 parts by mass or less, and more preferably 3 parts by mass or less, and wherein in a case of an acrylic-styrene-based copolymer containing an epoxy group, the content is preferably 0.1 parts by mass or more, and more preferably 0.3 parts by mass or more, and preferably 2 parts by mass or less, and more preferably 0.8 parts by mass or less.
<44> The polyester resin molding composition according to any one of the above <1> to <43>, which is prepared by melt-kneading raw materials containing a thermoplastic polyester resin (A), a plasticizer and/or an elastomer (B), and an inorganic filler (C), and molding a melt-kneaded product.
<45> The polyester resin molding composition according to the above <44>, wherein the melt-kneading temperature is preferably 220°C or higher, and preferably 300°C or lower, wherein in a case where a polybutylene terephthalate resin or a polytrimethylene terephthalate resin is used as a thermoplastic polyester resin, the melt-kneading temperature is preferably 220°C or higher, more preferably 225°C or higher, and even more preferably 230°C or higher, and preferably 250°C or lower, and more preferably 245°C or lower, and wherein in a case where a polyethylene terephthalate resin is used, the melt-kneading temperature is preferably 270°C or higher, and more preferably 275°C or higher, and preferably 290°C or lower, and more preferably 285°C or lower.
<46> The polyester resin molding composition according to the above <44> or <45>, wherein the melt-kneaded product is molded by various mold-processing methods such as injection molding, extrusion molding or thermoforming.
<47> The polyester resin molding composition according to any one of the above <44> to <46>, wherein in a case where the molding is carried out by press molding, as the mold temperature and pressure for the press molding, in a case where a polybutylene terephthalate resin is used as a thermoplastic polyester resin, it is preferable that the press is carried out preferably under the conditions of from 0° to 240°C and 5 to 30 MPa, more preferably under the conditions of from 10° to 150°C and 10 to 25 MPa, and even more preferably under the conditions of from 12° to 100°C and 10 to 22 MPa, and wherein in a case where a polytrimethylene terephthalate resin is used, it is preferable that press is carried out preferably under the conditions of from 0° to 200°C and 5 to 30 MPa, more preferably under the conditions of from 10° to 150°C and 10 to 25 MPa, and even more preferably under the conditions of from 15° to 80°C and 10 to 20 MPa, and wherein in a case where a polyethylene terephthalate resin is used as a thermoplastic polyester resin, it is preferable that press is carried out preferably under the conditions of from 0° to 240°C and 5 to 30 MPa, more preferably under the conditions of from 10° to 200°C and 10 to 25 MPa, and even more preferably under the conditions of from 15° to 190°C and 10 to 22 MPa.
<48> The polyester resin molding composition according to any one of the above <1> to <47>, wherein the upper limit of the weight-average molecular weight (Mw) may be 150,000 or less, and wherein in a case where a polybutylene terephthalate resin is used as a thermoplastic polyester resin, the lower limit is preferably 70,000 or more, more preferably 80,000 or more, and even more preferably 100,000 or more, and wherein in a case where a polytrimethylene terephthalate resin is used, the lower limit is preferably 60,000 or more, and more preferably 70,000 or more, and wherein in a case where a polyethylene terephthalate resin is used, the lower limit is preferably 30,000 or more, more preferably 40,000 or more, and even more preferably 50,000 or more.
<49> The polyester resin molding composition according to any one of the above <1> to <48>, wherein the lower limit for the absolute degree of crystallinity (Xc) may be 5% or more, and wherein in a case where a polybutylene terephthalate resin is used as a thermoplastic polyester resin, the lower limit is preferably 10% or more, more preferably 15% or more, even more preferably 20% or more, and even more preferably 25% or more, and preferably 35% or less, more preferably 30% or less, and even more preferably 28% or less, and wherein in a case where a polytrimethylene terephthalate resin is used, the lower limit is preferably 10% or more, more preferably 15% or more, and even more preferably 20% or more, and preferably 35% or less, and wherein in a case where a polyethylene terephthalate resin is used, the lower limit is preferably 10% or more, more preferably 15% or more, even more preferably 20% or more, and even more preferably 25% or more, and preferably 35% or less.
<50> Use of a polyester resin molding composition as defined in any one of the above <1> to <49> as a vibration-damping material.
<51> Use of a polyester resin molding composition as defined in any one of the above <1> to <49> as a manufactured article such as audio equipment, electric appliances, transportation vehicles, construction buildings, and industrial equipment, or parts or housing thereof.
<52> A method for producing a polyester resin molding composition for vibration-damping material, including the following steps (A-1) and (A-2):
   step (A-1): melt-kneading raw materials containing a thermoplastic polyester resin (A) constituted of a dicarboxylic acid component and a diol component, a plasticizer and/or an elastomer (B), and an inorganic filler (C), to prepare a melt-kneaded product having a weight-average molecular weight (Mw) of 50,000 or more and 150,000 or less; and
   step (A-2): molding a melt-kneaded product obtained in the step (A-1), to provide a molded article having an absolute degree of crystallinity (Xc) of 5% or more.
<53> A method for producing a polyester resin molding composition for vibration-damping material, including the following steps (B-1) and (B-2):
   step (B-1): melt-kneading raw materials containing a thermoplastic polyester resin (A) constituted of a dicarboxylic acid component and a diol component, a plasticizer and/or an elastomer (B), and an inorganic filler (C), to prepare a melt-kneaded product having a weight-average molecular weight (Mw) of 150,000 or less; and
   step (B-2): molding a melt-kneaded product obtained in the step (B-1), to provide a molded article having an absolute degree of crystallinity (Xc) of 5% or more and 37% or less.

### EXAMPLES

The present invention will be described more specifically by means of the following Examples. The examples are given solely for the purposes of illustration and are not to be construed as limitations of the present invention. Parts in Examples are parts by mass unless specified otherwise. Here, "ambient pressure" means 101.3 kPa, and "ambient temperature" means 25°C.

### [Glass Transition Temperature of Thermoplastic Polyester Resin and Elastomer]

Using a DMA apparatus (EXSTAR6000, manufactured by SII), a flat test piece (40 mm × 5 mm × 0.4 mm) of the samples prepared in the same manner as described later is heated from -50°C to 250°C at a heating rate of 2°C/min at a measurement frequency of 1 Hz, and a peak temperature of the resulting loss modulus is obtained as a glass transition point.

### [Crystallization Enthalpy of Thermoplastic Polyester Resin]

About 7 mg of a thermoplastic polyester resin sample is weighed, and using a DSC apparatus (DSC8500, manufactured by Perkin-Elmer), a crystallization enthalpy is calculated from exothermic peaks accompanying crystallization when the resin is, as prescribed in JIS K7122 (1999), is heated from 25°C to 300°C at a heating rate of 20°C/min, held in that state for 5 minutes, and thereafter cooled to 25°C or lower at a rate of -20°C/min.

### [Styrene Content of Elastomer]

An elastomer is dissolved in deuterated chloroform, and H-NMR spectrum of the sample solution is measured at an observation width of 15 ppm. In addition, previously, a calibration curve is obtained from peak areas and concentrations of styrene in the H-NMR spectrum of a polystyrene/deuterated chloroform solution for three kinds of concentrations, and a content of styrene is calculated from the peak areas of styrene in the sample solution using this calibration curve.

### Examples 1 to 14 and Comparative Examples 1 to 3

Raw materials for polyester resin molding compositions as listed in Tables 1 to 5 were melt-kneaded for one minute at a temperature as listed in Tables 1 to 5 with an intermeshing co-rotating twin-screw extruder manufactured by The Japan Steel Works, Ltd., TEX-28V, and strand-cut, to provide pellets of the polyester resin molding compositions. Here, the pellets obtained were subjected to dehumidification drying at 110°C for 3 hours, to adjust its water content to 500 ppm or less.

The pellets obtained were subjected to press molding with an auto-press molding machine and a hand-press molding machine manufactured by TOYO SEIKI SEISAKU-SHO, to provide a polyester resin molding composition. Specifically, a mold-release film (UPILEX) was adhered to two pieces of metal plates (ferro plates). Thereafter, using a metallic spacer [(127 mm × 12.7 mm × 1.6 mm) or (125 mm × 12 mm × 6 mm)] and a given amount of the sample (about 4 g), pellets were melted with an auto-press under the conditions of 280°C for 0.5 MPa in Example 3 and Comparative Example 9, and under the conditions of 240°C for 0.5 MPa for the remaining Examples and Comparative Examples, each of Examples and Comparative Examples being melted for 2 minutes, and further subjected to melt compression at 20 MPa for 2 minutes. Immediately thereafter, the melt-compressed product was transferred to a hand-press, and allowed to crystallize at 20 MPa for 2 minutes at a temperature as listed in Tables 1 to 5.

Here, the raw materials in Tables 1 to 5 are as follows.

### [Thermoplastic Polyester Resin]

PBT (5010R5): A polybutylene terephthalate resin, NOVADURAN 5010R5 manufactured by Mitsubishi Engineering-Plastics Corporation, unreinforced, glass transition temperature: 50°C, crystallization enthalpy ΔHmc: 44 J/g
PBT(700FP): A polybutylene terephthalate resin, DURANEX 700FP manufactured by Polyplastics Co., Ltd., unreinforced, glass transition temperature: 50°C, crystallization enthalpy ΔHmc: 44 J/g
PBT(500FP): A polybutylene terephthalate resin, DURANEX 500FP manufactured by Polyplastics Co., Ltd., unreinforced, glass transition temperature: 50°C, crystallization enthalpy ΔHmc: 44 J/g
PBT(300FP): A polybutylene terephthalate resin, DURANEX 300FP manufactured by Polyplastics Co., Ltd., unreinforced, glass transition temperature: 50°C, crystallization enthalpy ΔHmc: 44 J/g
PET: A polyethylene terephthalate resin, RT-553C manufactured by Japan Unipet Co., Ltd., unreinforced, glass transition point: 70°C, crystallization enthalpy ΔHmc: 42 J/g

### [Plasticizer]

DAIFATTY-101: A mixed diester obtained from adipic acid and a 1/1 diethylene glycol monomethyl ether/benzyl alcohol manufactured by DAIHACHI CHEMICAL INDUSTRY CO., LTD.

### [Elastomer]

Styrene-isoprene block copolymer: HYBRAR 5127 manufactured by Kuraray Plastics Co., Ltd., glass transition temperature: 8°C, styrene content: 20% by mass
Styrene-butadiene block copolymer (hydrogenated): S.O.E. L609 manufactured by ASAHI KASEI CHEMICALS, glass transition temperature: 10°C, styrene content: 67% by mass

### [Inorganic Filler]

Mica: A-21S manufactured by YAMAGUCHI MICA CO., LTD., length of the longest side of the largest surface: 23 µm, thickness of the largest surface: 0.33 µm, aspect ratio: 70
Talc (epoxy resin-treated): P-4 surface-treated product, manufactured by Nippon Talc Co., Ltd., length of the longest side of the largest surface: 4.5 µm, thickness of the largest surface: 0.13 µm, aspect ratio: 35

### [Crystal Nucleating Agent]

NA-05: An organic nitrogen-containing compound manufactured by ADEKA

### [Chain Extender]

Carbodilite LA-1: Polycarbodiimide manufactured by Nisshinbo Chemical Inc.
Joncryl ADR4368CS: a glycidyl group-containing acrylic-styrenic
copolymer, epoxy equivalent: 285 g/mol manufactured by BASF

The properties of the pellets and the molded articles obtained were evaluated in accordance with the methods of the following Test Examples 1 to 5. The results are shown in Tables 1 to 5.

### Test Example 1 - Weight-Average Molecular Weight (Mw)

The amount 0.6 mg of a pellet sample was completely dissolved in 2 g of HFIP (1,1,1,3,3,3-Hexafluoro-2-propanol, manufactured by Wako Pure Chemical, Industries Ltd.), and the solution was subjected to a molecular weight determination using gel filtration chromatography (EcoSEC HLC-8320GPC manufactured by TOSOH Corporation). The determination conditions were such that an eluate was HFIP/0.5 mM sodium trifluoroacetate, the flow rate was 0.2 mL/min, and the determination temperature was 40°C. Here, when plural peaks or shoulder parts were found, it is assumed as a molecular weight distribution of a polyester resin of a single peak.

### Test Example 2 - Absolute Degree of Crystallinity (Xc)

With respect to flat test pieces obtained by press molding, the flat test pieces having dimensions of 127 mm × 12.7 mm × 1.6 mm, measurements of diffraction rays were carried out with X-ray DIFFRACTOMETER XRD (MiniFlex II DESKTOP manufactured by Rigaku) at an X-ray angle of incidence 2θ of from 5° to 40°, and an absolute degree of crystallinity was calculated from intensities of peaks and halo.

### Test Example 3 - Loss Factor

With respect to flat test pieces obtained by press molding, the flat test pieces having dimensions of 127 mm × 12.7 mm × 1.6 mm, the loss factor was calculated in accordance with half band width method from peaks of secondary resonance of the frequency response function measured according to a central excitation method as prescribed in JIS K7391. A system comprising Type 3160 as an oscillator, Type 2718 as an amplifier, Type 4810 as an exciter, and Type 8001 as an accelerator sensor was used, all of which are manufactured by B & K, and a loss factor measurement software MS 18143 was used. The measurement environment was controlled with a thermostat PU-3J manufactured by ESPEC Corporation, and measurements were taken at 23°C. It can be judged that if a loss factor at each temperature is preferably 0.05 or more, and more preferably 0.06 or more, it is a high loss factor, so that the vibration-damping property is high, and it can be judged that the higher the numerical values, the greater the effects.

### Test Example 4 - Flowability

Using pellet samples, the melt flow rate (MFR) was measured in accordance with a method prescribed in JIS K7210. It can be judged that if an MFR is preferably 3 g/min or more, and more preferably 5 g/min or more, the flowability is high, so that the moldability is excellent, and it can be judged that the higher the numerical values, the greater the effects.

### Test Example 5 - Heat Resistance

As to rectangular test pieces obtained by press molding, the rectangular test pieces having dimensions of 125 mm × 12 mm × 6 mm, a deflection temperature under a load (deflection temperature under a load, DTUL) was obtained with a measurement instrument for a deflection temperature under a load (fully automatic heat distortion tester/No. 148-HDA6, manufactured by YASUDA SEIKI SEISAKUSHO, LTD.) when distorted for 0.254 mm, under the conditions of edgewise, heating rate of 2°C/minute, and a high load of 1.8 MPa, as prescribed in ASTM D648. It can be judged that if the heat resistance is preferably 90°C or higher, and more preferably 100°C or higher, the heat resistance is high, so that the moldability is excellent, and it can be judged that the higher the numerical values, the greater the effects.

### [Table 1]

**Table 1**

| | | Ex. | | | | | Comp. Ex. |
|---|---|---|---|---|---|---|---|
| | | 1 | 2 | 3 | 4 | 5 | 1 |
| Resin | PBT(700FP) | 100 | - | - | - | 100 | 100 |
| | PBT(5010R5) | - | 100 | - | - | - | - |
| | PBT(500FP) | - | - | 100 | - | - | - |
| | PBT(300FP) | - | - | - | 100 | - | - |
| | PET | - | - | - | - | - | - |
| Plasticizer | DAIFATTY-101 | 10 | 10 | 10 | 10 | 10 | 10 |
| Elastomer | Styrene-Isoprene Block Copolymer | - | - | - | - | - | - |
| Inorganic Filler | Mica | 40 | 40 | 40 | 40 | 40 | 40 |
| | Talc (Epoxy Resin-Treated) | - | - | - | - | - | - |
| Organic Crystal Nucleating Agent | NA-05 | - | - | - | - | - | - |
| Chain Extender | Carbodilite LA-1 | - | - | - | - | 0.5 | - |
| | Joncryl ADR4368CS | - | - | - | - | - | 1.0 |
| Mass Ratio of (Plasticizer, Elastomer) to (Inorganic Filler) [(Plasticizer, Elastomer)/Inorganic Filler] | | 20/80 | 20/80 | 20/80 | 20/80 | 20/80 | 20/80 |
| Melt-Kneading | Temperature, °C | 240 | 240 | 240 | 240 | 240 | 240 |
| | Time, minute | 1 | 1 | 1 | 1 | 1 | 1 |
| Molding | Mold Temperature, °C | 80 | 80 | 80 | 80 | 80 | 80 |
| | Time, minute | 2 | 2 | 2 | 2 | 2 | 2 |
| Weight-Average Molecular Weight Mw, x10,000 | | 10.4 | 7.3 | 7.1 | 4.9 | 11.1 | 16.0 |
| Absolute Degree of Crystallinity Xc, % | | 29 | 29 | 29 | 29 | 29 | 29 |
| Vibration-Damping Property | Loss Factor - Central Excitation Method/Secondary Resonance | 0.075 | 0.070 | 0.067 | 0.062 | 0.078 | 0.076 |
| Flowability | MFR at 240°C and 2.16kg, g/min | 8 | 25 | 26 | 51 | 6 | 1 |
| Heat Resistance | Deflection Temperature Under Load at 1.81MPa, °C | 143 | 150 | 165 | 170 | 141 | 138 |

| | | | | | | | |
|---|---|---|---|---|---|---|---|
| *: The amount of the raw materials used is expressed by parts by mass. | | | | | | | |

### [Table 2]

**Table 2**

| | | Ex. | | |
|---|---|---|---|---|
| | | 2 | 6 | 7 |
| Resin | PBT(700FP) | - | - | - |
| | PBT(5010R5) | 100 | 100 | 100 |
| | PBT(500FP) | - | - | - |
| | PBT(300FP) | - | - | - |
| | PET | - | - | - |
| Plasticizer | DAIFATTY-101 | 10 | 10 | 10 |
| Elastomer | Styrene-Isoprene Block Copolymer | - | - | - |
| Inorganic Filler | Mica | 40 | 40 | 40 |
| | Talc (Epoxy Resin-Treated) | - | - | - |
| Organic Crystal Nucleating Agent | NA-05 | - | - | - |
| Chain Extender | Carbodilite LA-1 | - | - | - |
| | Joncryl ADR4368CS | - | - | - |
| Mass Ratio of (Plasticizer, Elastomer) to (Inorganic Filler) [(Plasticizer, Elastomer)/Inorganic Filler] | | 20/80 | 20/80 | 20/80 |
| Melt-Kneading | Temperature, °C | 240 | 240 | 240 |
| | Time, minute | 1 | 1 | 1 |
| Molding | Mold Temperature, °C | 80 | 186 | 15 |
| | Time, minute | 2 | 2 | 2 |
| Weight-Average Molecular Weight Mw, x10,000 | | 7.3 | 7.3 | 7.3 |
| Absolute Degree of Crystallinity Xc, % | | 29 | 38 | 27 |
| Vibration-Damping Property | Loss Factor - Central Excitation Method/ Secondary Resonance | 0.070 | 0.061 | 0.077 |
| Flowability | MFR at 240°C and 2.16kg, g/min | 25 | 25 | 25 |
| Heat Resistance | Deflection Temperature Under Load at 1.81MPa, °C | 150 | 161 | 147 |

| | | | | |
|---|---|---|---|---|
| *: The amount of the raw materials used is expressed by parts by mass. | | | | |

### [Table 3]

**Table 3**

| | | Ex. | | Comp. Ex. |
|---|---|---|---|---|
| | | 4 | 8 | 2 |
| Resin | PBT(700FP) | - | - | - |
| | PBT(5010R5) | - | - | - |
| | PBT(500FP) | - | - | - |
| | PBT(300FP) | 100 | 100 | 100 |
| | PET | - | - | - |
| Plasticizer | DAIFATTY-101 | 10 | 10 | 10 |
| Elastomer | Styrene-Isoprene Block Copolymer | - | - | - |
| Inorganic Filler | Mica | 40 | 40 | 40 |
| | Talc (Epoxy Resin-Treated) | - | - | - |
| Organic Crystal Nucleating Agent | NA-05 | - | - | - |
| Chain Extender | Carbodilite LA-1 | - | - | - |
| | Joncryl ADR4368CS | - | - | - |
| Mass Ratio of (Plasticizer, Elastomer) to (Inorganic Filler) [(Plasticizer, Elastomer)/Inorganic Filler] | | 20/80 | 20/80 | 20/80 |
| Melt-Kneading | Temperature, °C | 240 | 240 | 240 |
| | Time, minute | 1 | 1 | 1 |
| Molding | Mold Temperature, °C | 80 | 140 | 186 |
| | Time, minute | 2 | 2 | 2 |
| Weight-Average Molecular Weight Mw, x10,000 | | 4.9 | 4.9 | 4.9 |
| Absolute Degree of Crystallinity Xc, % | | 29 | 34 | 38 |
| Vibration-Damping Property | Loss Factor - Central Excitation Method/ Secondary Resonance | 0.062 | 0.055 | 0.043 |
| Flowability | MFR at 240°C and 2.16kg, g/min | 51 | 51 | 51 |
| Heat Resistance | Deflection Temperature Under Load at 1.81MPa, °C | 170 | 173 | 176 |

| | | | | |
|---|---|---|---|---|
| *: The amount of the raw materials used is expressed by parts by mass. | | | | |

### [Table 4]

**Table 4**

| | | Ex. | Comp. Ex. |
|---|---|---|---|
| | | 9 | 3 |
| Resin | PBT(700FP) | - | - |
| | PBT(5010R5) | - | - |
| | PBT(500FP) | - | - |
| | PBT(300FP) | - | - |
| | PET | 100 | 100 |
| Plasticizer | DAIFATTY-101 | - | - |
| Elastomer | Styrene-Isoprene Block Copolymer | 30 | 30 |
| Inorganic Filler | Mica | - | - |
| | Talc (Epoxy Resin-Treated) | 40 | 40 |
| Organic Crystal Nucleating Agent | NA-05 | 0.3 | 0.3 |
| Chain Extender | Carbodilite LA-1 | - | - |
| | Joncryl ADR4368CS | - | - |
| Mass Ratio of (Plasticizer, Elastomer) to (Inorganic Filler) [(Plasticizer, Elastomer)/Inorganic Filler] | | 43/57 | 43/57 |
| Melt-Kneading | Temperature, °C | 280 | 280 |
| | Time, minute | 1 | 1 |
| Molding | Mold Temperature, °C | 186 | 15 |
| | Time, minute | 2 | 2 |
| Weight-Average Molecular Weight Mw, x10,000 | | 4.4 | 4.4 |
| Absolute Degree of Crystallinity Xc, % | | 30 | 3 |
| Vibration-Damping Property | Loss Factor - Central Excitation Method/ Secondary Resonance | 0.051 | 0.049 |
| Flowability | MFR at 240°C and 2.16kg, g/min | 10 | 10 |
| Heat Resistance | Deflection Temperature Under Load at 1.81MPa, °C | 110 | 82 |

| | | | |
|---|---|---|---|
| *: The amount of the raw materials used is expressed by parts by mass. | | | |

### [Table 5]

**Table 5**

| | | Ex. | | | | | |
|---|---|---|---|---|---|---|---|
| | | 1 | 10 | 11 | 12 | 13 | 14 |
| Resin | PBT(700FP) | 100 | 100 | 100 | 100 | 100 | 100 |
| | PBT(5010R5) | - | - | - | - | - | |
| | PBT(500FP) | - | - | - | - | - | |
| | PBT(300FP) | - | - | - | - | - | |
| | PET | - | - | - | - | - | |
| Plasticizer | DAIFATTY-101 | 10 | 10 | 15 | - | 15 | 10 |
| Elastomer | Styrene-Isoprene Block Copolymer | - | - | - | 30 | 15 | |
| | Styrene-Butadiene Block Copolymer | | | | | | 15 |
| Inorganic Filler | Mica | 40 | 40 | 40 | 40 | 40 | 30 |
| | Talc (Epoxy Resin-Treated) | - | - | - | - | - | |
| Organic Crystal Nucleating Agent | NA-05 | - | - | - | - | - | |
| Chain Extender | Carbodilite LA-1 | - | - | - | - | - | |
| | Joncryl ADR4368CS | - | - | - | - | - | |
| Mass Ratio of (Plasticizer, Elastomer) to (Inorganic Filler) [(Plasticizer, Elastomer)/Inorganic Filler] | | 20/80 | 20/80 | 27/73 | 43/57 | 43/57 | 45/55 |
| Melt-Kneading | Temperature, °C | 240 | 240 | 240 | 240 | 240 | 240 |
| | Time, minute | 1 | 1 | 1 | 1 | 1 | 1 |
| Molding | Mold Temperature, °C | 80 | 15 | 80 | 80 | 80 | 80 |
| | Time, minute | 2 | 2 | 2 | 2 | 2 | 2 |
| Weight-Average Molecular Weight Mw, x10,000 | | 10.4 | 10.4 | 10.4 | 10.5 | 10.5 | 10.5 |
| Absolute Degree of Crystallinity Xc, % | | 29 | 27 | 29 | 29 | 29 | 29 |
| Vibration-Damping Property | Loss Factor - Central Excitation Method/ Secondary Resonance | 0.075 | 0.082 | 0.080 | 0.098 | 0.132 | 0.092 |
| Flowability | MFR at 240°C and 2.16kg, g/min | 8 | 8 | 9 | 5 | 12 | 9 |
| Heat Resistance | Deflection Temperature Under Load at 1.81MPa, °C | 143 | 140 | 129 | 119 | 118 | 124 |

| | | | | | | | |
|---|---|---|---|---|---|---|---|
| *: The amount of the raw materials used is expressed by parts by mass. | | | | | | | |

As a result, as shown in Tables 1 to 5, it can be seen that the polyester resin molding compositions having specified weight-average molecular weights and specified absolute degrees of crystallinity are excellent in both the vibration-damping property and heat resistance, and that the composition before molding also has excellent flowability. For example, as is clear from the comparison between Examples 4 and 8 and Comparative Example 2 and the comparison between Example 9 and Comparative Example 3, it can be seen that if the absolute degrees of crystallinity are not within specified ranges, even with the same raw material compositions of the resin molding compositions and the same weight-average molecular weights, the vibration-damping property may be worsened, and not only the vibration-damping property but also heat resistance may be worsened depending upon the kinds of the thermoplastic resins. In addition, from the comparison between Examples 1 to 5 and Comparative Example 1, even with the same blending of the plasticizer or the inorganic filler in the composition, the weight-average molecular weights of the resin molding compositions obtained greatly fluctuate depending upon the degrees of polymerization of the raw material thermoplastic polyester resin or the crosslinking degree with the chain extender, so that the resin molding compositions having molecular weights within specified ranges are excellent in both the vibration-damping property and heat resistance, and that the composition before molding shows excellent flowability.

### INDUSTRIAL APPLICABILITY

The polyester resin molding composition of the present invention can be suitably used as a vibration-damping material in, for example, manufactured articles, such as materials for audio equipment such as speakers, television, radio cassette recorders, headphones, audio components, or microphones, electric appliances, transportation vehicles, construction buildings, and industrial equipment, or parts or housing thereof.

## Claims

1. A polyester resin molding composition for vibration-damping material comprising:
a thermoplastic polyester resin (A) constituted of a dicarboxylic acid component and a diol component,
a plasticizer and/or an elastomer (B), and
an inorganic filler (C),
wherein the polyester resin molding composition satisfies one or both selected from the following (i) and (ii):
(i) a weight-average molecular weight (Mw) is 50,000 or more and 150,000 or less, and an absolute degree of crystallinity (Xc) is 5% or more; and
(ii) a weight-average molecular weight (Mw) is 150,000 or less, and an absolute degree of crystallinity (Xc) is 5% or more and 37% or less.

2. The polyester resin molding composition according to claim 1, wherein the dicarboxylic acid component in the thermoplastic polyester resin (A) comprises one or more members selected from the group consisting of aliphatic dicarboxylic acids, alicyclic dicarboxylic acids, aromatic dicarboxylic acids, and dicarboxylic acids having a furan structure.

3. The polyester resin molding composition according to claim 1 or 2, wherein the diol component in the thermoplastic polyester resin (A) comprises one or more members selected from the group consisting of aliphatic diols, alicyclic diols, aromatic diols, and diols having a furan structure.

4. The polyester resin molding composition according to any one of claims 1 to 3, wherein the plasticizer is one or more members selected from the group consisting of polyester-based plasticizers, polyhydric alcohol ester-based plasticizers, polycarboxylic acid ester-based plasticizers, each having a (poly)oxyalkylene group or an alkylene group having from 2 to 10 carbon atoms, and compounds represented by the general formula (I).

5. The polyester resin molding composition according to any one of claims 1 to 4, wherein the plasticizer comprises one or more members selected from the group consisting of the following Compound Groups (A) to (C):
Compound Group (A): an ester compound having two or more ester groups in the molecule, wherein at least one kind of the alcohol component constituting the ester compound is an alkylene oxide adduct of an alcohol, wherein an alkylene oxide moiety having from 2 to 3 carbon atoms is in an amount of from 0.5 to 5 mol on average, per one hydroxyl group;
Compound Group (B): a compound represented by the formula (II):
R⁵O-CO-R⁶-CO-[(OR⁷)ₘO-CO-R⁶-CO-]ₙOR⁵ (II)
wherein R⁵ is an alkyl group having from 1 to 4 carbon atoms; R⁶ is an alkylene group having from 2 to 4 carbon atoms; R⁷ is an alkylene group having from 2 to 6 carbon atoms, m is the number of from 1 to 6, and n is the number of from 1 to 12, with proviso that all of R⁶'s may be identical or different, and that all of R⁷'s may be identical or different; and
Compound Group (C): an ester compound having two or more ester groups in the molecule, wherein the alcohol component constituting the ester compound is a mono-alcohol.

6. The polyester resin molding composition according to any one of claims 1 to 5, wherein the elastomer is one or more members selected from the group consisting of polystyrene-isoprene block copolymers, polystyrene-polybutadiene copolymers, polystyrene-hydrogenated polybutadiene copolymers, polystyrene-hydrogenated polyisoprene-polystyrene block copolymers, polystyrene-vinyl-polyisoprene-polystyrene block copolymers, polystyrene-hydrogenated polybutadiene-hydrogenated polyisoprene-polystyrene block copolymers, and polystyrene-hydrogenated polybutadiene-polyisoprene-polystyrene block copolymers.

7. The polyester resin molding composition according to any one of claims 1 to 6, wherein the inorganic filler (C) comprises one or more members selected from the group consisting of plate-like fillers, granular fillers, acicular fillers, and fibrous fillers.

8. The polyester resin molding composition according to any one of claims 1 to 7, wherein the inorganic filler (C) is a plate-like filler.

9. The polyester resin molding composition according to any one of claims 1 to 8, wherein the inorganic filler (C) is mica.

10. The polyester resin molding composition according to any one of claims 1 to 9, the component (B) comprises one or more plasticizers and one or more elastomers.

11. The polyester resin molding composition according to any one of claims 1 to 10, the plasticizer, alone or in two or more kinds, is used in a combination with an elastomer, alone or in two or more kinds.

12. The polyester resin molding composition according to claim 10 or 11, wherein a total content of the plasticizer and the elastomer is 15 parts by mass or more, and 60 parts by mass or less, based on 100 parts by mass of the thermoplastic polyester resin (A).

13. The polyester resin molding composition according to any one of claims 10 to 12, wherein the mass ratio of the plasticizer to the elastomer, i.e. plasticizer/elastomer, is from 30/70 to 70/30.

14. A vibration-damping material comprising a polyester resin molding composition as defined in any one of claims 1 to 13.

15. A method for producing a polyester resin molding composition for vibration-damping material, comprising the following steps (A-1) and (A-2):
step (A-1): melt-kneading raw materials comprising a thermoplastic polyester resin (A) constituted of a dicarboxylic acid component and a diol component, a plasticizer and/or an elastomer (B), and an inorganic filler (C), to prepare a melt-kneaded product having a weight-average molecular weight (Mw) of 50,000 or more and 150,000 or less; and
step (A-2): molding a melt-kneaded product obtained in the step (A-1) to provide a molded article having an absolute degree of crystallinity (Xc) of 5% or more.

16. A method for producing a polyester resin molding composition for vibration-damping material, comprising the following steps (B-1) and (B-2):
step (B-1): melt-kneading raw materials comprising a thermoplastic polyester resin (A) constituted of a dicarboxylic acid component and a diol component, a plasticizer and/or an elastomer (B), and an inorganic filler (C), to prepare a melt-kneaded product having a weight-average molecular weight (Mw) of 150,000 or less; and
step (B-2): molding a melt-kneaded product obtained in the step (B-1) to provide a molded article having an absolute degree of crystallinity (Xc) of 5% or more and 37% or less.
